# EUROPEAN PATENT SPECIFICATION

(11) **EP 4 439 351 B1**
(45) Date of publication and mention of the grant of the patent: **22.10.2025**
(21) Application number: 24162433.7
(22) Date of filing: 08.03.2024
(51) Int. Cl.: G06F 21/55, G06F 21/56, G06F 12/02, H04L 69/40

(54) **STORAGE DEVICE PERFORMING DATA RECOVERY IN MULTI-TENANCY ENVIRONMENT AND OPERATION METHOD THEREOF**
SPEICHERVORRICHTUNG ZUR DURCHFÜHRUNG VON DATENWIEDERHERSTELLUNG IN EINER MEHRTEILNEHMERUMGEBUNG UND BETRIEBSVERFAHREN DAFÜR
DISPOSITIF DE STOCKAGE EFFECTUANT UNE RÉCUPÉRATION DE DONNÉES DANS UN ENVIRONNEMENT À LOCATAIRES MULTIPLES ET SON PROCÉDÉ DE FONCTIONNEMENT

(30) Priority: 31.03.2023 KR 20230042504; 01.02.2024 US 202418429852
(43) Date of publication of application: 02.10.2024
(73) Proprietor: Samsung Electronics Co., Ltd., Suwon-si, Gyeonggi-do 16677 (KR)
(72) Inventor: LEE, Seung-Ho, 16677 Suwon-si (KR); MOON, Youngjoo, 16677 Suwon-si (KR); JEONG, Jiman, 16677 Suwon-si (KR)
(74) Representative: Marks & Clerk LLP

(56) References cited:
- US-A1- 2019 130 097
- US-A1- 2020 042 707
- BAEK SUNGHA ET AL: "SSD-Assisted Ransomware Detection and Data Recovery Techniques", IEEE TRANSACTIONS ON COMPUTERS, IEEE, USA, vol. 70, no. 10, 22 July 2020 (2020-07-22), pages 1762 - 1776, XP011875981, ISSN: 0018-9340, [retrieved on 20210906], DOI: 10.1109/TC.2020.3011214
- JONG-HYEOK PARK ET AL: "Enlightening Flash Storage to Stream Writes by Objects", ARXIV.ORG, CORNELL UNIVERSITY LIBRARY, 201 OLIN LIBRARY CORNELL UNIVERSITY ITHACA, NY 14853, 12 January 2022 (2022-01-12), XP091138267

## Description

### FIELD

The present disclosure relates to a storage device, and more particularly, relates to a storage device for performing data recovery in a multi-tenancy environment and an operation method thereof.

### BACKGROUND

A semiconductor memory may be classified as a volatile memory, which loses data stored therein when a power is turned off, such as a static random access memory (SRAM) or a dynamic random access memory (DRAM) or a nonvolatile memory, which retains data stored therein even when a power is turned off, such as a flash memory, a phase-change RAM (PRAM), a magnetic RAM (MRAM), a resistive RAM (RRAM), or a ferroelectric RAM (FRAM). Nowadays, a multi-tenancy storage system in which a single storage medium supports a plurality of tenants is being developed. The multi-tenancy storage system may allow a plurality of tenants to share a storage resource and may manage data of the tenants so as to be isolated from each other (or independently of each other).

Ransomware is a type of malware that encodes or encrypts data targeted for attack and demands money in exchange for an encryption key necessary for decrypting the encrypted data. The ransomware has become a risk factor that causes enormous financial and social losses. Accordingly, there are required measures that allow a storage device to cope with a ransomware attack.

Baek, Sungha et al "SSD-Assisted Ransomware Detection and Data Recovery Techniques", IEEE Transactions on Computers, IEEE, USA, Vol. 70, No. 10, 22 July 2020, pages 1762-1776, discloses a detection algorithm that observes I/O patterns of a host system and decides whether the host is being attacked by ransomwares is in an early stage. Once an encryption attack is detected, a recovery algorithm is triggered to recover original files by leveraging a delayed deletion feature of an SSD.

US 2019/130097 A1 discloses methods and equipment for determining whether a ransomware attack is suspected which include a data storage device including a controller; non-volatile memory; a data path between the controller and the non-volatile memory; and an anti-ransomware module configured to monitor the data path. Methods and equipment also include monitoring a data path between a controller and a non-volatile memory on a data storage device; calculating an entropy of a data set to be written to the non-volatile memory; analyzing the calculated entropy; and determining whether a malware attack is suspected. Methods and equipment also include monitoring a data path between a controller and a non-volatile memory on a data storage device; identifying activity indicative of ransomware; once activity indicative of ransomware has been identified, calculating an entropy of a data set to be written to the non-volatile memory; analyzing the calculation; and determining whether a ransomware attack is suspected.

Jong-Hyeok Park et al "Enlightening Flash Storage to Stream Writes by Objects", ARXIV.ORG, Cornell University Library, 201 Olin Library Cornell University Ithaca, NY 14853, 12 January 2022, discloses an interface for flash storage which is used to pass the logical address ranges of logical objects to the flash storage and thus enlighten the storage to stream writes by objects.

### SUMMARY

According to an aspect of the present invention there is provided an operation method of a storage device according to claim 1. Optional features of the operation method are defined according to the claims dependent on claim 1.

According to an aspect of the present invention there is provided a storage device according to claim 15.

The present disclosure provides a storage device capable of recovering data against a malware attack in a multi-tenancy environment and an operation method thereof.

According to some example embodiments of the present disclosure, an operation method of a storage device includes detecting a ransomware attack on one or more tenants, such as one or more tenants executed in a host, updating a tenant status table including a status of each of the one or more tenants based on a result of the detection, in response to receiving a write request from the host, writing recovery information for data recovery in a non-volatile memory based on a determination that a status value of a tenant corresponding to the write request from among the one or more tenants is a status value corresponding to a warning status from among a plurality of status values, and performing the data recovery based on the recovery information, in response to receiving a recovery signal from the host.

According to some example embodiments of the present disclosure, a storage device includes a non-volatile memory that includes a plurality of data areas and a plurality of spare areas respectively corresponding to the plurality of data areas, and a storage controller configured to update a tenant status table including a status of each of one or more tenants based on a result of detecting a ransomware attack on each of the one or more tenants, in response to a determination that a write request is received from a host device, write data corresponding to the write request in a first data area among the plurality of data areas of the non-volatile memory and write recovery information in a first spare area corresponding to the first data area, based on a determination that a status value of a tenant corresponding to the write request from among the one or more tenants is a status value corresponding to a warning status from among a plurality of status values, and perform data recovery based on the recovery information, in response to a recovery signal received from the host device.

According to some example embodiments of the present disclosure, a storage controller includes processing circuitry configured to detect a ransomware attack on one or more tenants based on an input/output signal with a host device, transmit an alarm signal to the host device based on a result of the detection, to output a table update signal, to receive a recovery signal from the host device, and output a recovery control signal corresponding to the recovery signal, update a tenant status table based on the table update signal, control a non-volatile memory in response to a write request received from the host device, wherein when writing data corresponding to the write request at a page included in the non-volatile memory, based on a determination that a status value of a tenant corresponding to the write request from among the one or more tenants is a status value corresponding to a warning status from among a plurality of status values, the processing circuitry controls the non-volatile memory such that an address link to original data is written in a spare area of the page, and perform a data recovery operation based on link information included in the page, in response to the recovery control signal.

### BRIEF DESCRIPTION OF THE DRAWINGS

Example embodiments of the present disclosure will be more clearly understood from the following detailed description taken in conjunction with the accompanying drawings in which.
FIG. 1 is a block diagram illustrating a storage system according to some example embodiments.
FIG. 2 is a block diagram illustrating a storage controller of FIG. 1 according to some example embodiments.
FIG. 3 is a block diagram for describing a detection operation of a storage controller of FIG. 1 according to some example embodiments.
FIG. 4 is a block diagram for describing how a storage controller of FIG. 3 operates depending on a status of a tenant according to some example embodiments.
FIG. 5 is a flowchart illustrating an operation of a storage device of FIG. 1 according to some example embodiments.
FIG. 6 is a diagram for describing a tenant status table of FIG. 3 according to some example embodiments.
FIG. 7 is a diagram illustrating a mapping table loaded to a buffer memory of FIG. 1 according to some example embodiments.
FIG. 8 is a diagram illustrating a plurality of pages included in a non-volatile memory of FIG. 1 according to some example embodiments.
FIG. 9 is a flowchart illustrating an operation corresponding to a write request which a storage controller of FIG. 4 receives according to some example embodiments.
FIG. 10 is a flowchart for describing an operation of writing recovery information, which is described with reference to FIG. 9 according to some example embodiments.
FIG. 11 is a flowchart for describing an operation of writing an address to original data, which is described with reference to FIG. 10 according to some example embodiments.
FIG. 12 is a diagram for describing an example of an operation of a storage controller described with reference to FIG. 9 according to some example embodiments.
FIG. 13 is a diagram for describing an example of an operation of a storage controller, which is described with reference to FIG. 10, according to some example embodiments.
FIG. 14 is a diagram for describing another example of an operation of a storage controller, which is described with reference to FIG. 10, according to some example embodiments.
FIG. 15 is a diagram illustrating communication between a host manager and a protector manager of FIG. 4 according to some example embodiments.
FIG. 16 is a flowchart for describing an operation in which a storage controller of FIG. 4 recovers data according to some example embodiments.
FIG. 17 is a flowchart for describing an operation of FIG. 16, in which a storage controller recovers original data associated with a target logical address based on recovery information according to some example embodiments.
FIG. 18 is a diagram for describing an example of an operation of a storage controller, which is described with reference to FIG. 17, according to some example embodiments.
FIG. 19 is a diagram for describing another example of an operation of a storage controller, which is described with reference to FIG. 17, according to some example embodiments.
FIG. 20 is a diagram for describing an operation of FIG. 15, in which a storage controller discards recovery information based on a received discard signal according to some example embodiments.
FIG. 21 is a flowchart for describing an operation in which a storage controller of FIG. 1 performs garbage collection according to some example embodiments.
FIG. 22 is a diagram for describing an operation of a storage controller, which is described with reference to FIG. 21, according to some example embodiments.
FIG. 23 is a block diagram for another example of a storage system according to according to some example embodiments.
FIG. 24 is a block diagram indicating a data center to which a storage system according to according to some example embodiments is applied.

### DETAILED DESCRIPTION

The present inventive concepts will be described more fully hereinafter with reference to the accompanying drawings, in which some example embodiments of the present inventive concepts are shown. As those skilled in the art would realize, the described example embodiments may be modified in various different ways, all without departing from the scope of the present inventive concepts.

Accordingly, the drawings and descriptions are to be regarded as illustrative in nature and not restrictive. Like reference numerals designate like elements throughout the specification. The sequence of operations or steps are not limited to the order presented in the claims or figures unless specifically indicated otherwise. The order of operations or steps may be changed, several operations or steps may be merged, a certain operation or step may be divided, and a specific operation or step may not be performed.

As used herein, the singular forms "a" and "an" are intended to include the plural forms as well, unless the context clearly indicates otherwise. Although the terms first, second, and the like may be used herein to describe various elements, components, steps and/or operations, these terms are only used to distinguish one element, component, step or operation from another element, component, step, or operation.

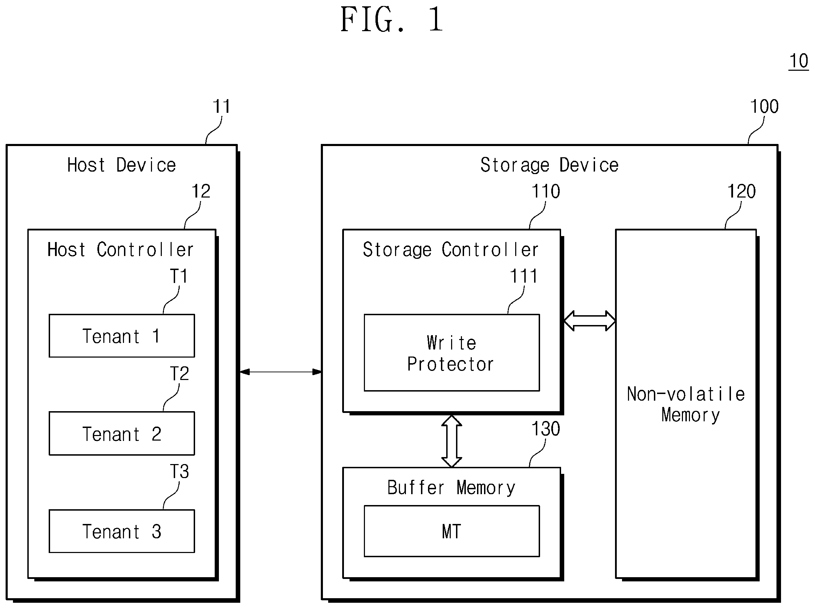

FIG. 1 is a block diagram illustrating a storage system according to some example embodiments. Referring to FIG. 1, a storage system 10 may include a host device 11 and a storage device 100. In some example embodiments, the storage system 10 may include at least one of various information processing devices such as a personal computer, a laptop computer, a server, a workstation, a smartphone, and a tablet PC, but example embodiments are not limited thereto.

In some example embodiments, the storage system 10 may support a multi-tenancy storage architecture. In the multi-tenancy storage architecture, tenants may share a common access point but may have resources that are isolated or independent. A plurality of tenants, for example, a first tenant T1 (Tenant 1), a second tenant T2 (Tenant 2), and a third tenant T3 (Tenant 3) may be executed by a host controller 12 included in the host device 11. Each of the plurality of tenants T1 to T3 may access the storage device 100 to store data in the storage device 100 or to read data stored in the storage device 100.

In some example embodiments, the storage device 100 may include a storage controller 110, a non-volatile memory 120, and a buffer memory 130. Depending on requests of the plurality of tenants T1 to T3 received from the host device 11, the storage controller 110 may store data in the non-volatile memory 120 or may provide data stored in the non-volatile memory 120 to the plurality of tenants T1 to T3. In some example embodiments, the host device 11 and the storage device 100 may communicate with each other based on a peripheral component interconnect express (PCI-express) interface or a PCI-express based non-volatile memory express (NVMe) interface (not shown). The storage device 100 may distinguish the plurality of tenants T1 to T3 based on a physical function or a virtual function of the interface. The plurality of tenants T1 to T3 may access only allocated areas, and the access to areas of different tenants may be restricted.

In some example embodiments, each of the plurality of tenants T1 to T3 may be configured to independently access the storage device 100 and may be exposed to a ransomware attack. For example, when the third tenant T3 is exposed to the ransomware attack, all or part of the data that corresponds to the third tenant T3 and is stored in the storage device 100 may be encrypted by the ransomware. An operation in which the third tenant T3 uses the corresponding data without a decryption key is restricted.

The storage device 100 according to some example embodiments may detect the ransomware attack on the plurality of tenants T1 to T3 and may provide write protection depending on the status of each of the plurality of tenants T1 to T3. For example, the storage controller 110 of the storage device 100 may include a write protector 111. The write protector 111 may detect the ransomware attack on the plurality of tenants T1 to T3 and may manage the status of each of the plurality of tenants T1 to T3 depending on a risk level of the ransomware attack, for example, based on a result of the ransomware detection.

According to some example embodiments, in a normal situation where the result of detecting the ransomware attack on the plurality of tenants T1 to T3 indicates that a tenant is not exposed to a risk, the write protector 111 may designate the status of the tenant as a normal status. For example, where the result of detecting the ransomware attack on the plurality of tenants T1 to T3 indicates that, for example, the first tenant T1, is not exposed to a risk, the write protector 111 may designate (or be configured to designate) the status of the first tenant T1 as a normal status.

In some example embodiments, when the ransomware attack is suspicious, the write protector 111 may designate the status of the corresponding tenant (e.g., the first tenant T1) as a warning status. When a tenant (e.g., the first tenant T1) corresponding to the write request received from the host device 11 is in the warning status, the storage controller 110 may take measures to enable data recovery in the process of performing the write operation in response to the write request.

In some example embodiments, when the ransomware attack is detected, the write protector 111 may designate the status of the tenant (e.g., the first tenant T1) as a protection status. When the write request for the tenant (e.g., the first tenant T1) in the protection status is received, the storage controller 110 may not perform the write operation and may operate in a read-only mode such that data stored therein are protected.

The non-volatile memory 120 may include a plurality of NAND flash memories. Alternatively, the non-volatile memory 120 may include an electrically erasable programmable read-only memory (EEPROM), a phase change random access memory (PRAM), a resistance random access memory (RRAM), a nano floating gate memory (NFGM), a polymer random access memory (PoRAM), a magnetic random access memory (MRAM), a ferroelectric random access memory (FRAM), or any other memory similar thereto.

The non-volatile memory 120 may include a plurality of memory blocks each including a plurality of pages. The storage controller 110 may distinguish the plurality of pages in the non-volatile memory 120 through physical page addresses. The storage controller 110 may write or read data in or from the non-volatile memory 120 in units of page. The storage controller 110 may erase data in units of memory block.

The buffer memory 130 may temporarily store data to be written in the non-volatile memory 120 or data read from the non-volatile memory 120. The buffer memory 130 may be implemented with a volatile memory device or may be implemented with a non-volatile memory device. For example, the buffer memory 130 may be implemented with a dynamic random access memory (DRAM), a static random access memory (SRAM), a phase change random access memory (PRAM), or a memory similar thereto. A mapping table MT in which logical addresses and physical addresses are mapped may be loaded to the buffer memory 130. The storage controller 110 may translate a logical address received from the host device 11 into a physical address by using the mapping table MT.

The mapping table MT may map logical addresses and physical addresses in various manners such as page-based mapping, block-based mapping, and hybrid mapping in which a block unit and a page unit are mixed, but example embodiments are not limited thereto.

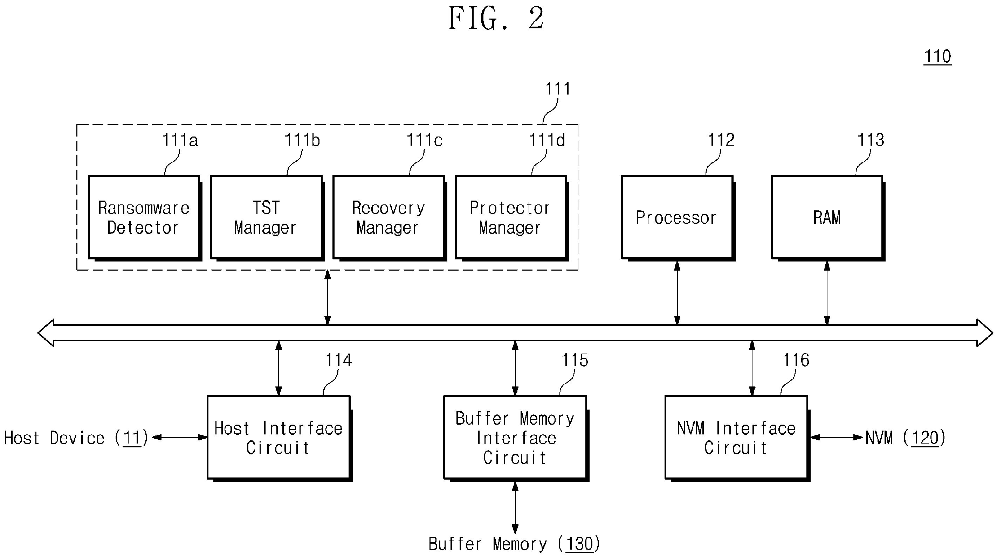

FIG. 2 is a block diagram illustrating a storage controller 110 of FIG. 1 according to some example embodiments. Referring to FIG. 2, the storage controller 110 may include the write protector 111, a processor 112, a RAM 113, a host interface circuit 114, a buffer memory interface circuit 115, and a non-volatile memory interface circuit 116.

The write protector 111 may be configured to detect the ransomware attack on each of the plurality of tenants T1 to T3 and to manage the status of each of the plurality of tenants T1 to T3 based on a result of the detection. For example, the write protector 111 may include a ransomware detector 111a, a tenant status table manager (TST Manager) 111b, a recovery manager 111c, and a protector manager 111d.

In some example embodiments, the ransomware detector 111a may detect the ransomware attack on each of the plurality of tenants T1 to T3 and may output a detection signal based on a detection result. According to some example embodiments, the ransomware attack is made in a manner of revising data previously stored in a storage medium to encrypted data. Accordingly, due to the ransomware attack, the host device 11 may generate the write request for overwriting original data with the encrypted data. Meanwhile, according to the data storing principle of the non-volatile memory 120, an in-place overwrite operation in which new data are written at a physical address of previously stored data may be restricted. The overwrite means an operation of mapping newly requested data to a logical address mapped to previous valid data. Due to the ransomware attack, the host device 11 transmits the write request for writing encrypted data in the non-volatile memory 120 and mapping the encrypted data to a logical address of original data. Due to the write request corresponding to the overwrite caused by the ransomware attack, the original data stored in the non-volatile memory 120 may be set to invalid data, and the encrypted data may be written in a new physical space, and a mapping relationship between the logical address and the physical address may be updated. When the tenant (e.g., the first tenant T1) accesses the logical address where the original data before the overwrite are stored, the encrypted data may be returned instead of the original data.

The ransomware detector 111a may detect the ransomware attack on each of the plurality of tenants T1 to T3 by analyzing a pattern of an input/output signal between the plurality of tenants T1 to T3 and the storage device 100. The ransomware detector 111a may analyze the input/output pattern by using a detection method that is based on a combination of input parameters or a detection method that uses a model trained through machine learning.

Unlike FIG. 2 where the ransomware detector 111a is included in the storage controller 110, in some example embodiments, the detection of the ransomware attack on the plurality of tenants T1 to T3 may be made on a host side. When the detection of the ransomware attack on the plurality of tenants T1 to T3 may be made on a host side, the host device 11 may transmit the detection signal to the storage device 100.

In some example embodiments, the tenant status table manager (TST Manager) 111b may update a tenant status table (TST) indicating the status of each of the plurality of tenants T1 to T3. The tenant status table (TST) may indicate the status of each of the plurality of tenants T1 to T3 by using a status value. In a normal case where there is no risk of the ransomware attack on the tenant (e.g., the first tenant T1), the tenant status table manager (TST Manager) 111b may set the status value of the tenant status table (TST) to the normal status.

In some example embodiments, when the ransomware attack on the tenant (e.g., the first tenant T1) is suspicious, the tenant status table manager (TST Manager) 111b may set the status value of the tenant status table (TST) to the warning status. In some example embodiments, when the storage controller 110 determines that the status of a tenant (e.g., the first tenant T1) corresponding to the received write request is the warning status based on the tenant status table (TST), the storage controller 110 may write recovery information for data recovery in the non-volatile memory 120 in the processing of performing the write operation corresponding to the write request. The recovery information for example is information used to return data revised by the ransomware to original data and may include the original data or an address link to the original data, which is (or may be) for a direct/indirect connection with the original data. When the storage controller 110 performs data recovery for returning the revised data to the original data, the storage controller 110 may access the original data by using the address link to the original data.

In some example embodiments, when the ransomware attack on the tenant (e.g., the first tenant T1) is detected, the tenant status table manager (TST Manager) 111b may set the status value of the tenant status table (TST) to the protection status. As described above, in some example embodiments, the ransomware attack is made in the manner of encrypting data stored in the storage device 100 and revising previously stored original data with the encrypted data. When the storage controller 110 determines that the status of the tenant (e.g., the first tenant T1) corresponding to the received write request is the protection status based on the tenant status table (TST), the storage controller 110 may not perform the write operation for the purpose of protecting data previously stored in the storage device 100. In other words, the storage controller 110 may perform the read-only operation with respect to the tenant (e.g., the first tenant T1) of the protection status.

In some example embodiments, when the tenant (e.g., the first tenant T1) is in the warning status, the recovery manager 111c may perform data recovery for returning the revised data to the original data based on the recovery information written in the process of performing the write operation. The recovery manager 111c may access a physical address of the non-volatile memory 120, at which the original data are stored, through the address link to the original data. The recovery manager 111c may recover the original data by accessing the physical address where the original data are stored, reading the original data, writing the original data at any other physical address, and updating a mapping relationship between the logical address and the physical address. The recovery manager 111c may perform data recovery as a background operation.

In some example embodiments, the protector manager 111d may support communication between the write protector 111 and the host device 11. The protector manager 111d may receive the detection signal that the ransomware detector 111a outputs. The protector manager 111d may output a table control signal indicating the update of the tenant status table (TST) to the tenant status table manager (TST Manager) 111b based on the detection signal. The tenant status table manager (TST Manager) 111b may update the tenant status table (TST) in response to the received table control signal. The protector manager 111d may transmit the alarm signal to the host device 11 in response to the received detection signal.

In some example embodiments, the protector manager 111d may receive a recovery signal from the host device 11. The recovery signal may include a tenant (e.g., the first tenant T1) designated to perform the data recovery. The protector manager 111d may output a recovery control signal in response to the recovery signal. The recovery manager 111c may receive the recovery control signal and may perform data recovery on data of the tenant (e.g., the first tenant T1).

In some example embodiments, the processor 112 may control an overall operation of the storage controller 110. For example, the processor 112 may execute various applications (e.g., a flash translation layer (FTL)) on the storage controller 110.

In some example embodiments, the flash translation layer may perform various functions (or operations) such as address mapping, wear-leveling, and garbage collection, but example embodiments are not limited thereto. In some example embodiments, when the flash translation layer performs address mapping, the flash translation layer may process the translation from a logical address of the host device 11 to a physical address of the non-volatile memory 120 by using a mapping table. All or part of the mapping table may be loaded to the buffer memory 130 or the RAM 113. The mapping table may include an addressing field indicating the mapping relationship between the logical address and the physical address and a meta field indicating metadata used to effectively use the non-volatile memory 120. In some example embodiments, the wear-leveling may allow memory blocks of the non-volatile memory 120 to be used uniformly and thus may prevent excessive degradation of a specific memory block. In some example embodiments, the garbage collection may secure an available capacity of the non-volatile memory 120 through a way to copy valid data of an existing block to any other memory block and to erase the existing memory block.

In some example embodiments, the RAM 113 may be used as a buffer memory, a working memory, or a cache memory of the storage controller 110, but example embodiments are not limited thereto. The RAM 113 may store codes and instructions that the processor 112 executes. The RAM 113 may store data processed by the processor 112. The RAM 113 may be implemented with a static RAM (SRAM), for example.

In some example embodiments, the write protector 111 may be implemented in the form of software or hardware, or in the form of a combination of hardware and software. For example, when the write protector 111 is implemented in the form of software, information about the write protector 111 may be loaded to the RAM 113, and the write protector 111 loaded to the RAM 113 may be executed by the processor 112. In some example embodiments, each component of the write protector 111 including the ransomware detector 111a and the recovery manager 111c may be provided in a plug-in manner. The storage controller 110 may also include an interface for supporting various plug-ins including the ransomware detector 111a and the recovery manager 111c.

In some example embodiments, the host interface circuit 114 may communicate with the plurality of tenants T1 to T3 of the host device 11 through a given interface. The given interface may include, for example, at least one of various host interfaces such as a peripheral component interconnect express (PCI-express) interface, a non-volatile memory express (NVMe) interface, a serial ATA (SATA) interface, a serial attached SCSI (SAS) interface, and a universal flash storage (UFS) interface, but example embodiments are not limited thereto.

In some example embodiments, the buffer memory interface circuit 115 may control the read operation and the write operation of the buffer memory 130 under control of the processor 112. The buffer memory interface circuit 115 may provide the mapping table to the buffer memory 130.

In some example embodiments, the non-volatile memory interface circuit 116 may provide communication between the storage controller 110 and the non-volatile memory 120. The non-volatile memory interface circuit 116 may communicate a command, an address, and data with the non-volatile memory 120 through an input/output channel. The non-volatile memory interface circuit 116 may communicate a control signal with the non-volatile memory 120 through a control channel.

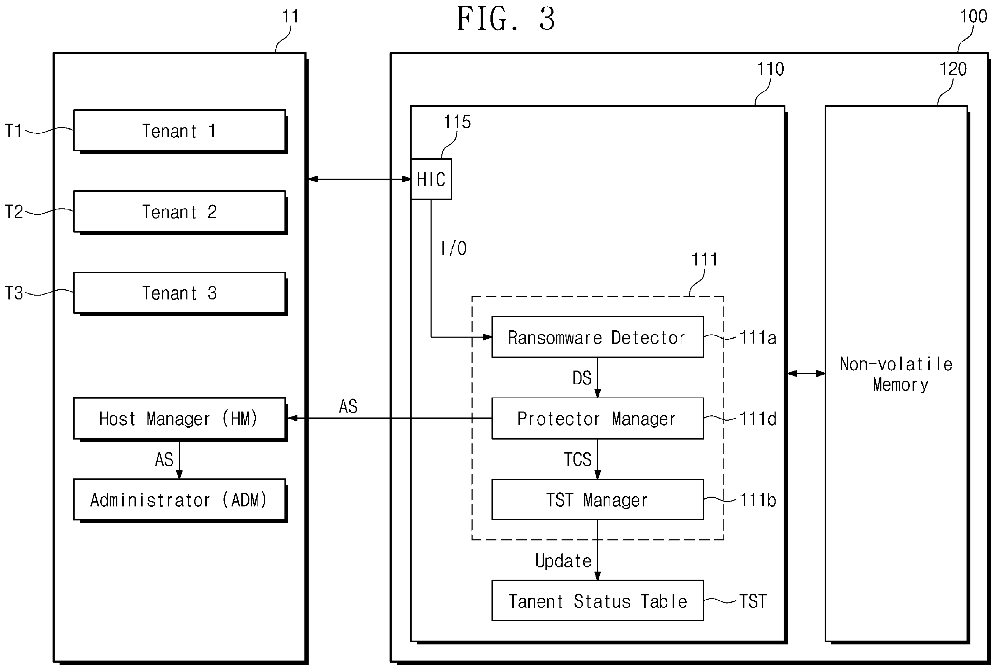

FIG. 3 is a block diagram for describing a detection operation of a storage controller of FIG. 1 according to some example embodiments. Referring to FIG. 3, the ransomware detector 111a may monitor an input/output signal I/O between the host device 11 and the storage controller 110. The ransomware detector 111a may determine an abnormal action or an abnormal traffic based on the pattern of the input/output signal I/O and may output a detection signal DS for each of the plurality of tenants T1 to T3. The detection signal DS may indicate a risk degree of a ransomware attack on a tenant (e.g., the first tenant T1). For example, the detection signal DS may indicate whether the ransomware attack on the tenant (e.g., the first tenant T1) is suspicious or whether the ransomware attack is certain.

The protector manager 111d may receive the detection signal DS that the ransomware detector 111a outputs and may transmit an alarm signal AS to a host manager HM included in the host device 11 in response to the detection signal DS. The host manager HM may transfer the alarm signal AS to an administrator ADM. The administrator ADM may check status changes of the plurality of tenants T1 to T3 executed in the host device 11 through the alarm signal AS.

Meanwhile, in some example embodiments, the protector manager 111d may transmit a table control signal TCS to the tenant status table manager (TST Manager) 111b. The table control signal TCS directs a change in the status value of each of the plurality of tenants T1 to T3, which is stored in a tenant status table TST. The tenant status table manager (TST Manager) 111b may update the tenant status table TST based on the table control signal TCS. The storage controller 110 may check the status of the tenant (e.g., the first tenant T1) based on the status value of the tenant (e.g., the first tenant T1) present in the tenant status table TST.

In some example embodiments, the storage controller 110 may perform a defense operation corresponding to the ransomware attack depending on the status value of the tenant (e.g., the first tenant T1). For example, in the case where the status value of the tenant (e.g., the first tenant T1) is set to the warning status due to the situation where the ransomware attack on the tenant (e.g., the first tenant T1) is suspicious, the storage controller 110 may perform an operation of writing recovery information for providing protection against the ransomware attack. For example, in the case where the status value of the tenant (e.g., the first tenant T1) is set to the protection status as the ransomware attack on the tenant (e.g., the first tenant T1) is detected, with regard to the tenant (e.g., the first tenant T1) corresponding to the protection status, the storage controller 110 may operate in the read-only mode such that only the read operation is performed and the write operation is not performed.

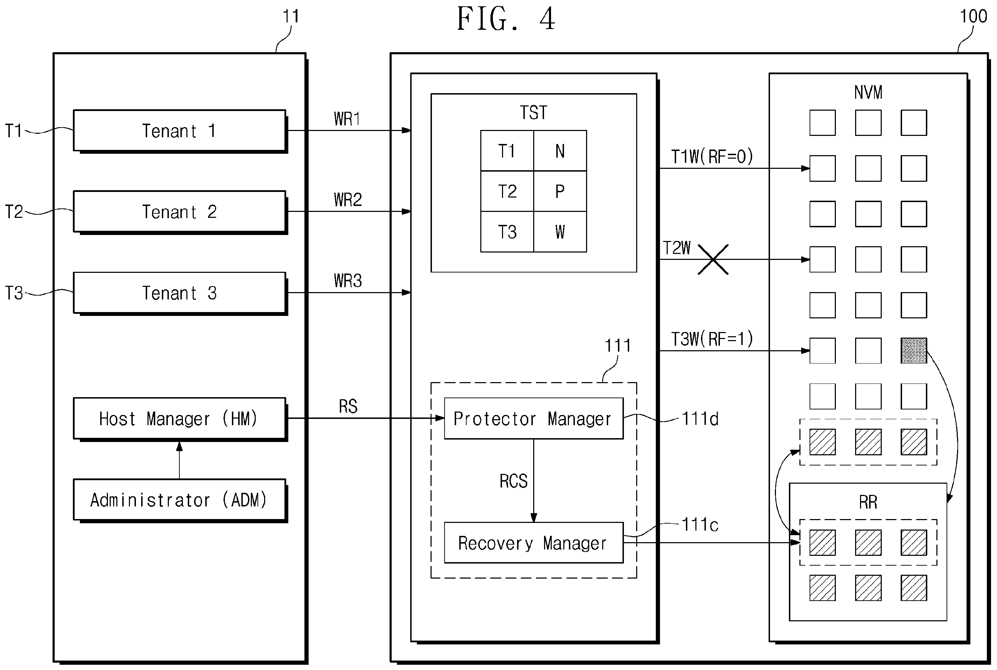

FIG. 4 is a block diagram for describing how a storage controller of FIG. 3 operates depending on a status of a tenant according to some example embodiments. Referring to FIG. 4, the storage controller 110 may receive the write request from a host (e.g., host device 11).

For example, the storage controller 110 receives a first write request WR1 of the first tenant T1, a second write request WR2 of the second tenant T2, and a third write request WR3 of the third tenant T3.

In some example embodiments, when the storage controller 110 receives the first write request WR1 to the third write request WR3, the storage controller 110 may check a status value of a tenant (e.g., the first tenant T1, the second tenant T2, and/or the third tenant T3) corresponding to a write request (e.g., the first write request WR1, the second write request WR2, and/or the third write request WR3) based on the tenant status table TST.

In some example embodiments, when the storage controller 110 receives the first write request WR1, the storage controller 110 may determine that the status of the first tenant T1 is a normal status "N", based on the tenant status table TST. The storage controller 110 may transmit a write command T1W for the first tenant T1 to the non-volatile memory 120. In this case, a recovery flag RF that is used for data recovery may be set to a logical value of "0". The storage controller 110 may control the non-volatile memory 120 through the write command T1W such that data corresponding to the first write request WR1 are written in memory cells.

In some example embodiments, when the storage controller 110 receives the second write request WR2, the storage controller 110 may determine that the status of the second tenant T2 is a protection status "P", based on the tenant status table TST. The storage controller 110 may not send a write command T2W. That is, for example, the storage controller 110 may operate in the read-only mode with regard to the second tenant T2.

In some example embodiments, when the storage controller 110 receives the third write request WR3, the storage controller 110 may determine that the status of the third tenant T3 is a warning status "W", based on the tenant status table TST. The storage controller 110 may transmit a write command T3W for the third tenant T3 to the non-volatile memory 120. In this case, the recovery flag RF that is used for data recovery may be set to a logical value of "1". The storage controller 110 may control the non-volatile memory 120 through the write command T3W such that data corresponding to the third write request WR3 are written in memory cells. By using a recovery region RR that is used when data recovery is performed, the storage controller 110 manages recovery information including the original data or an address link for direct/indirect connection with the original data and the recovery flag RF set to the logical value of "1".

In some example embodiments, the administrator ADM may determine whether to perform data recovery. For example, when the administrator ADM determines to perform data recovery, the host manager HM may transmit a recovery signal RS to the protector manager 111d. The protector manager 111d may transmit a recovery control signal RCS to the recovery manager 111c in response to the recovery signal RS. In some example embodiments, when the recovery control signal RCS is received, the recovery manager 111c may recover data stored by the tenant having the warning status to the original data based on the recovery information managed in the recovery region RR.

As described with reference to FIG. 2, in some example embodiments, the ransomware attack revises the original data stored in the storage device 100 to encrypted data and makes it impossible to use the data stored in the storage device 100 without decryption using a decryption key. The storage controller 110 may recover the data revised by the ransomware to the original data before encryption by performing data recovery based on the recovery information managed in the recovery region RR. Also, when the ransomware attack on the tenant is detected, the storage controller 110 may operate in the read-only mode with regard to the tenant and thus may prevent data from being additionally revised.

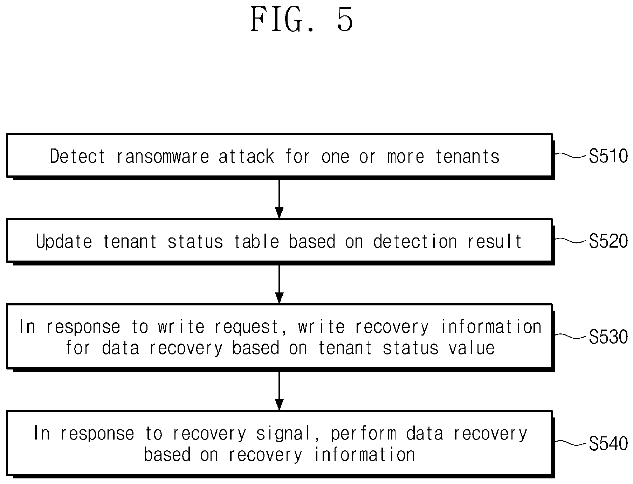

FIG. 5 is a flowchart illustrating an operation of a storage device of FIG. 1 according to some example embodiments. Referring to FIG. 5, an operational method of the storage device 100 may include detecting the ransomware attack on one or more tenants executed in the host device 11 (S510). In some example embodiments, operation S510 may be performed by the ransomware detector 111a. For example, the ransomware detector 111a may monitor an input/output with the host device 11 to detect the ransomware attack and may use various ransomware detection manners and/or methods for ransomware detection.

In some example embodiments, the operational method of the storage device 100 may include updating the tenant status table (TST) including the status of each of the one or more tenants based on a detection result (S520). For example, operation S520 may be performed by the tenant status table manager (TST Manager) 111b.

In some example embodiments, the operational method of the storage device 100 may include writing recovery information for data recovery in the non-volatile memory 120 depending on whether a tenant corresponding to a write request received from the host device 11 has a status value corresponding to the warning status from among a plurality of status values (S530). For example, the operational method of the storage device may include, in response to receiving a write request corresponding to a tenant, writing recovery information for data recovery based on the tenant status value. In some example embodiments, operation S530 may be performed by the storage controller 110 that is controlled by the processor 112. In this case, the storage controller 110 may perform the write operation in response to the write request and may together write the recovery information in the non-volatile memory 120 in the process of performing the write operation.

The operation method of the storage device 100 may include performing data recovery based on a recovery signal received from the host device 11, and for example, the data recovery may be based on recovery information (S540). In some example embodiments, operation S540 may be performed by the recovery manager 111c. The recovery manager 111c may perform data recovery as a background operation.

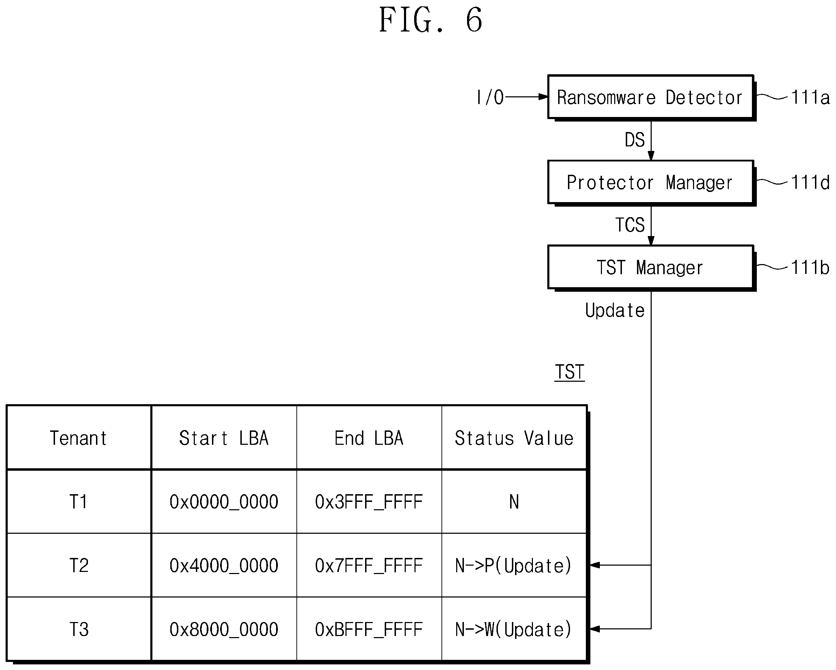

FIG. 6 is a diagram for describing a tenant status table of FIG. 3 according to some example embodiments. Referring to FIG. 6, the tenant status table TST may include status values of the plurality of tenants T1 to T3. Each of the status values included in the tenant status table TST may correspond to one of the normal status "N", the warning status "W", and the protection status "P".

For example, the normal status "N" may indicate a general status, and the storage controller 110 may perform the read operation or the write operation depending on a request of a tenant having the normal status "N".

For example, the warning status "W" may indicate that the ransomware attack is suspicious, and the storage controller 110 may write recovery information for data recovery together in the process of writing data corresponding to the write request of the tenant being in the warning status "W" in the non-volatile memory 120. The storage controller 110 may recover original data based on the recovery information.

For example, the protection status "P" may indicate that the ransomware attack is detected, and the storage controller 110 may operate in the read-only mode without performing the write operation in response to the write request of the tenant being in the protection status "P".

In some example embodiments, when the ransomware detector 111a monitors the input/output signal I/O with the host device 11 and outputs a detection signal DS, the protector manager 111d may output the table control signal TCS in response to the detection signal DS. The tenant status table manager (TST Manager) 111b may update a tenant status value of the tenant status table TST in response to the table control signal TCS.

It is assumed, in some example embodiments, that a result of an operation in which the ransomware detector 111a monitors the input/output signal I/O, the ransomware detector 111a indicates the situation where the ransomware attack on the second tenant T2 is detected and the ransomware attack on the third tenant T3 is not detected but is suspicious. For example, the ransomware detector 111a may output the detection signal DS including information about a risk level of the ransomware attack on each of the second tenant T2 and the third tenant T3 to the protector manager 111d. The protector manager 111d may provide the tenant status table manager (TST Manager) 111b with the table control signal TCS for updating the status value of the tenant included in the tenant status table TST, based on the detection signal DS. The tenant status table manager (TST Manager) 111b may update the tenant status table TST such that the status value corresponding to the second tenant T2 is changed from the normal status "N" to the protection status "P". Also, in some example embodiments, the tenant status table manager (TST Manager) 111b may update the tenant status table TST such that the status value corresponding to the third tenant T3 is changed from the normal status "N" to the warning status "W".

In some example embodiments, after updating the tenant status table TST, when the storage controller 110 receives various requests including the write request from the host device 11, the storage controller 110 may perform an operation based on the tenant status table TST.

In some example embodiments, the tenant status table TST may further include a continuous logical address range allocated to the plurality of tenants T1 to T3. For example, the tenant status table TST may further include a start address (e.g., Start LBA) and an end address (e.g., End LBA) of the continuous logical address range allocated for each of the plurality of tenants T1 to T3. Below, it is assumed that logical block addresses LBA are allocated to the plurality of tenants T1 to T3.

For example, the tenant status table TST may show that logical block addresses ranging from a start address (e.g., Start LBA) of "0x0000_0000" to an end address (e.g., End LBA) of "0x3FFF_FFFF" are allocated to the first tenant T1. The tenant status table TST may show that logical block addresses ranging from a start address (e.g., Start LBA) of "0x4000_0000" to an end address (e.g., End LBA) of "0x7FFF_FFFF" are allocated to the second tenant T2 and logical block addresses ranging from a start address (e.g., Start LBA) of "0x8000_0000" to an end address (e.g., End LBA) of "0xBFFF_FFFF" are allocated to the third tenant T3.

In some example embodiments, the storage controller 110 may receive a request including a logical address for the access to the non-volatile memory 120 from the host device 11 and may identify a tenant corresponding to the received request based on the logical address range included in the tenant status table TST (e.g., Start LBA to End LBA).

In some example embodiments, the tenant status table TST may be loaded to the RAM 113 of the storage controller 110 or may be loaded to the buffer memory 130. Meanwhile, the tenant status table TST may be stored in the meta region of the non-volatile memory 120, in which the metadata are stored.

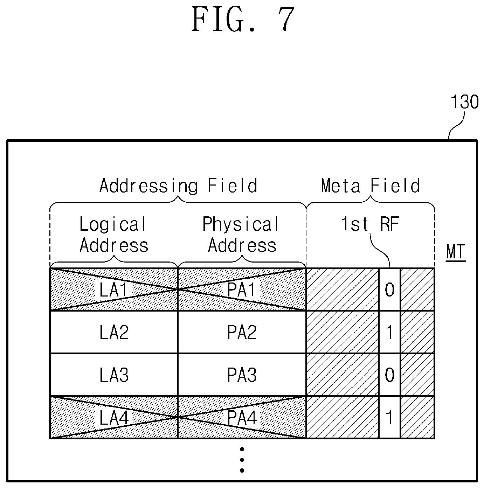

FIG. 7 is a diagram illustrating a mapping table loaded to a buffer memory 130 of FIG. 1 according to some example embodiments. Referring to FIG. 7, the mapping table MT that is used to map a logical address and a physical address may include a first recovery flag 1st RF.

For example, the mapping table MT may include an addressing field indicating a mapping relationship between a logical address and a physical address and a meta field indicating metadata used to effectively manage the non-volatile memory 120. For example, the meta field of the mapping table MT may include the first recovery flag 1st RF that is used for data recovery.

In some example embodiments, the logical addresses LA1 to LA4 are logical addresses allocated to one tenant. In some example embodiments, a mapping relationship between the logical address LA1 and a physical address PA1 may be invalid. That is, data stored at the physical address PA1 may be invalid data. In this case, the first recovery flag 1st RF may be set to a logical value of "0", and the logical address LA1 may be irrelevant to data recovery.

In some example embodiments, a mapping relationship between the logical address LA2 and a physical address PA2 may be valid. For example, data stored at the physical address PA2 may be valid data. In this case, the first recovery flag 1st RF may be set to the a logical value of "1", and the logical address LA2 and the physical address PA2 may be used for data recovery.

In some example embodiments, a mapping relationship between the logical address LA3 and a physical address PA3 may be valid. For example, data stored at the physical address PA3 may be valid data. In this case, the first recovery flag 1st RF may be set to a logical value of "0", and the logical address LA3 may be irrelevant to data recovery.

In some example embodiments, a mapping relationship between the logical address LA4 and a physical address PA4 may be invalid. For example, data stored at the physical address PA4 may be invalid data. In this case, the first recovery flag 1st RF may be set to a logical value of "1", and the logical address LA4 or the physical address PA4 may be used for data recovery.

In some example embodiments, data stored at the physical address PA1 and the physical address PA4 may be invalid data. The data stored at the physical address PA1 may not be used for data recovery, and there may be a need to erase the data stored at the physical address PA1. However, because the data stored at the physical address PA4 are invalid but are capable of being used for data recovery, the data stored at the physical address PA4 may be used for data recovery in the non-volatile memory 120 without being erased or may be maintained until recovery data are discarded.

Meanwhile, in some example embodiments, the meta field of the mapping table MT may further include a flag (not shown) indicating whether a mapping relationship between a logical address and a physical address is valid.

In some example embodiments, when the storage controller 110 receives the recovery signal from the host 11, the storage controller 110 may perform data recovery with respect to the logical addresses LA2 and LA4 each corresponding to the first recovery flag 1st RF set to "1".

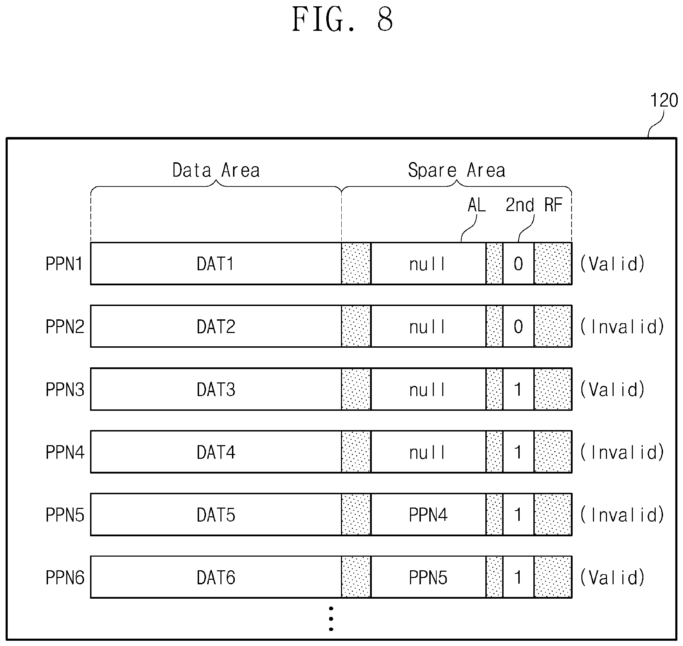

FIG. 8 is a diagram illustrating a plurality of pages included in a non-volatile memory of FIG. 1 according to some example embodiments. Referring to FIG. 8, the non-volatile memory 120 may include a plurality of pages. Each of the plurality of pages may include a data area and a spare area. The spare area of each page may include an address link field in which an address link AL is written and recovery flag field in which a second recovery flag 2nd RF is written.

In some example embodiments, the storage controller 110 may write or read data in or from the non-volatile memory 120 in units of page. A physical page address PPN may be assigned for each of the plurality of pages. Below, for convenience, the description will refer to a physical address as a physical page address.

In some example embodiments, the storage controller 110 may write data corresponding to the write request received from the host device 11 in a data area included in the page of the non-volatile memory 120, and the data area may be also referred to as a "main region". In some example embodiments, when the storage controller 110 writes the data corresponding to the write request in the data area of the page, the storage controller 110 may write recovery information, which is to be used for data recovery, in the spare area of the same page. The recovery information stored in the spare area may include the address link AL that is used to read original data in a data recovery process and the second recovery flag 2nd RF indicating that a page is associated with data recovery.

In some example embodiments, the address link AL is a physical page address for direct/indirect connection with the original data or a null value. The address link AL may be written in the address link field of the spare area. In some example embodiments, the null value may indicate that a physical page address for direct/indirect connection with the original data does not exist. The null value may be replaced with any other value providing the same function. For example, instead of the null value, various manners or formats may be used to indicate that an address link does not exist. In some example embodiments, when the storage controller 110 performs data recovery, the storage controller 110 may obtain the original data based on the address link AL written in the address link field in the spare area of the page.

In some example embodiments, the plurality of pages illustrated in FIG. 8 may be included in the same memory block or may be included in different memory blocks, but example embodiments are not limited thereto.

In some example embodiments, data DAT1 may be written in the data area of the page corresponding to a physical page address PPN1, the null value may be written in the address link AL field of the spare area, and a logical value of "0" may be written in the recovery flag 2nd RF field. For example, address link AL is set to the null value and the second recovery flag 2nd RF is set to "0". For example, the data DAT1 may be valid data, and the host device 11 may access the data DAT1 through a mapped logical address.

In some example embodiments, data DAT2 may be written in the data area of the page corresponding to a physical page address PPN2, the null value may be written in the address link AL field of the spare area, and a logical value of "0" may be written in the recovery flag 2nd RF field. For example, address link AL is set to the null value and the second recovery flag 2nd RF is set to "0". For example, the data DAT2 may be invalid data.

In some example embodiments, data DAT3 may be written in the data area of the page corresponding to a physical page address PPN3, the null value may be written in the address link AL field of the spare area, and a logical value of "1" may be written in the recovery flag 2nd RF field. For example, address link AL is set to the null value and the second recovery flag 2nd RF is set to "1". For example, the data DAT3 may be valid data, and the host device 11 may access the data DAT3 through a mapped logical address.

In some example embodiments, data DAT4 may be written in the data area of the page corresponding to a physical page address PPN4, the null value may be written in the address link AL field of the spare area, and a logical value of "1" may be written in the recovery flag 2nd RF field. For example, address link AL is set to the null value and the second recovery flag 2nd RF is set to "1". For example, the data DAT4 may be invalid data.

In some example embodiments, data DAT5 may be written in the data area of the page corresponding to a physical page address PPN5, the physical page address PPN4 may be written in the address link AL field of the spare area, and a logical value of "1" may be written in the recovery flag 2nd RF field. For example, address link AL is set to the physical page address PPN4 and the second recovery flag 2nd RF is set to "1". For example, the data DAT5 may be invalid data.

In some example embodiments, data DAT6 may be written in the data area of the page corresponding to a physical page address PPN6, the physical page address PPN5 may be written in the address link AL field of the spare area, and a logical value of "1" may be written in the recovery flag 2nd RF field. For example, address link AL is set to the physical page address PPN5 and the second recovery flag 2nd RF is set to "1". For example, the data DAT6 may be valid data, and the host device 11 may access the data DAT6 through a logical address.

In some example embodiments, when the storage controller 110 performs data recovery, the storage controller 110 may obtain the original data based on the address link AL and the second recovery flag 2nd RF stored in the spare area. For example, when the storage controller 110 performs data recovery with respect to the physical page address PPN6, the storage controller 110 may determine that the physical page address PPN5 includes an address link for direct/indirect connection with original data, based on the spare area of the physical page address PPN6, that is, the address link AL field where address link AL set to the physical page address PPN5 is written and the recovery flag 2nd RF field where the second recovery flag 2nd RF set to the logical value of "1" is written. For example, the storage controller 110 may determine that the physical page address PPN5 includes an address link for direct/indirect connection with original data, based on the physical page address PPN4 written in the address link AL field of the physical page address PPN5 and the logical value of "1" written in the recovery flag 2nd RF field of the physical page address PPN5. The storage controller 110 may determine that the data DAT4 are original data, based on that the null value is written in the address link AL field of the physical page address PPN4 and the logical value of "1" is written in the recovery flag 2nd RF field of the physical page address PPN4. In some example embodiments, when the storage controller 110 performs data recovery, the storage controller 110 may recover data by reading the original data DAT4 corresponding to the physical page address PPN6.

In some example embodiments, even though the data DAT4 and the data DAT5 being invalid data are written at the physical page address PPN4 and the physical page address PPN5, the data DAT4 correspond to original data, and the physical page address PPN4 written in the spare area of the physical page address PPN5 corresponds to recovery information that is used for data recovery. Accordingly, the physical page address PPN4 and the physical page address PPN5 that are invalid need to be maintained until the data recovery operation is performed on the non-volatile memory 120 or until it is determined that the recovery information is discarded.

In some example embodiments, when the write request for the tenant having the warning status corresponds to the overwrite, a logical address previously mapped to original data may be mapped to a physical address of a page where revised data are stored, and the page where the original data are stored may be set to be invalid; for example, the storage controller 110 may maintain the original data and an address link AL to the original data in a recovery region and may use the original data and the address link AL to the original data maintained in the recovery region in the processing of recovering data.

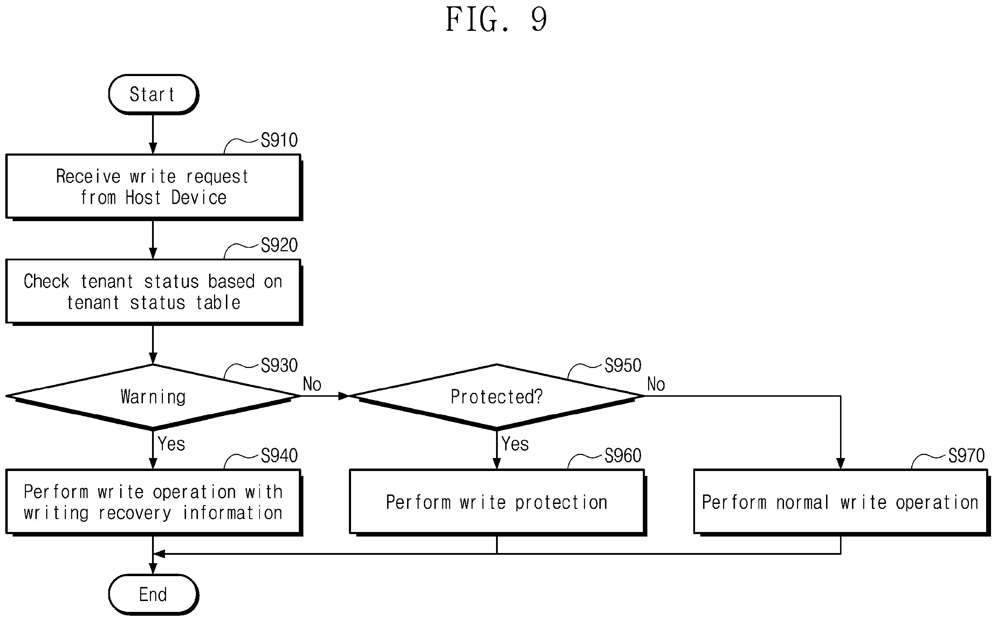

FIG. 9 is a flowchart illustrating an operation corresponding to a write request which a storage controller of FIG. 4 receives according to some example embodiments. Referring to FIG. 9, the storage controller 110 may receive the write request from the host device 11 (S910).

The storage controller 110 may check the status of the tenant associated with the received write request based on a tenant status table (S920).

The storage controller 110 may determine whether the status of the tenant corresponding to the write request is the warning status (S930).

In some example embodiments, when it is determined that the status of the tenant corresponding to the write request is the warning status (Yes in operation S930), the storage controller 110 may perform the write operation including an operation of writing recovery information (S940). For example, the storage controller 110 may write the recovery information being data to be used for data recovery in the spare area of the page where data corresponding to the write request are written.

In some example embodiments, when it is determined that the status of the tenant corresponding to the write request is not the warning status (No in operation S930), the storage controller 110 may determine that the status of the tenant is the protection status (S950).

In some example embodiments, when it is determined that the status of the tenant is the protection status (Yes in operation S950), the storage controller 110 may perform a write protection operation (S960). For example, in the write protection operation, the storage device 100 may operate in the read-only mode with regard to the tenant and may return only information indicating that the data are not written in the non-volatile memory 120.

In some example embodiments, when it is determined that the status of the tenant is not the protection status (No in operation S950), the storage controller 110 may perform a normal write operation (S970). Unlike the write operation performed in operation S940, when the storage controller 110 performs the normal write operation, the storage controller 110 may perform the write operation without writing recovery information.

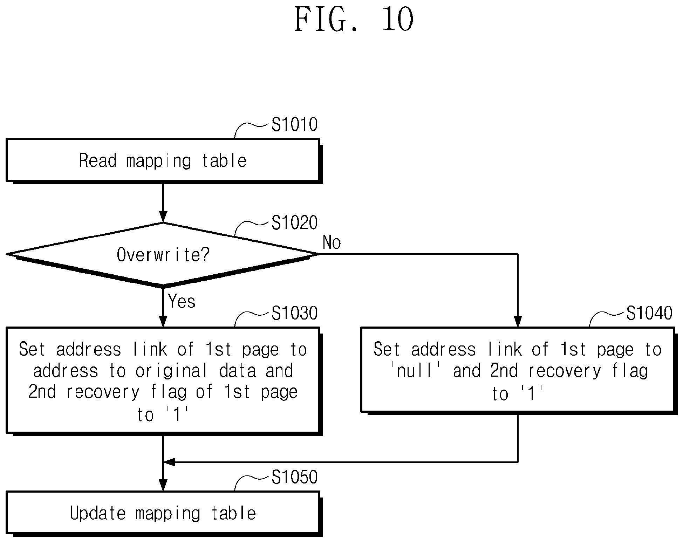

FIG. 10 is a flowchart for describing an operation of writing recovery information according to some example embodiments, which is described with reference to FIG. 9. Referring to FIG. 10, the storage system 10 may read the mapping table MT (S1010).

In some example embodiments, the storage controller 110 may determine whether the write request received from the host device 11 corresponds to the overwrite, based on the mapping table MT (S1020). For example, when it is determined based on the mapping table MT that a logical address corresponding to the write request received from the host device 11 is mapped to a valid page, the storage controller 110 may determine that the received write request corresponds to the overwrite. For example, when it is determined based on the mapping table MT that the logical address corresponding to the write request is mapped to an invalid page, the write request may correspond to a request for writing new data; in this case, the storage controller 110 may determine that the write request does not correspond to the overwrite.

In some example embodiments, the ransomware attack is made in such a way as to overwrite encrypted data at a logical address of previously stored data. When the received write request corresponds to the overwrite, recovery information for recovering original data needs to be maintained in the non-volatile memory 120.

In some example embodiments, when it is determined that the write request received from the host device 11 corresponds to the overwrite (Yes in operation S1020), the storage controller 110 may set an address link of a first page to an address to original data and may set a second recovery flag of the first page to a logical value of "1" (S1030). For example, the data corresponding to the write request received from the host device 11 may be written in the data area of the first page. The storage controller 110 may write the address link set to the address to original data in the address link field of the first page and may write the second recovery flag set to "1" in the recovery flag field of the first page.

In some example embodiments, when it is determined that the write request received from the host device 11 does not correspond to the overwrite (No in operation S1020), the storage controller 110 may set an address link of the first page to the null value and may set the second recovery flag of the first page to "1" (S1040). For example, the data corresponding to the write request received from the host device 11 may be written in the data area of the first page. The storage controller 110 may write the address link set to the null value in the address link field of the first page and may write the second recovery flag set to "1" in recovery flag field of the first page.

For example, the page including the address link field and the recovery flag field where the recovery information is written and the page where the data corresponding to the write request are written may be the same page as the first page.

The storage controller 110 may update a mapping table (S1050). For example, a first recovery flag of a logical address corresponding to the write request received from the host device 11 may be set to a logical value of "1".

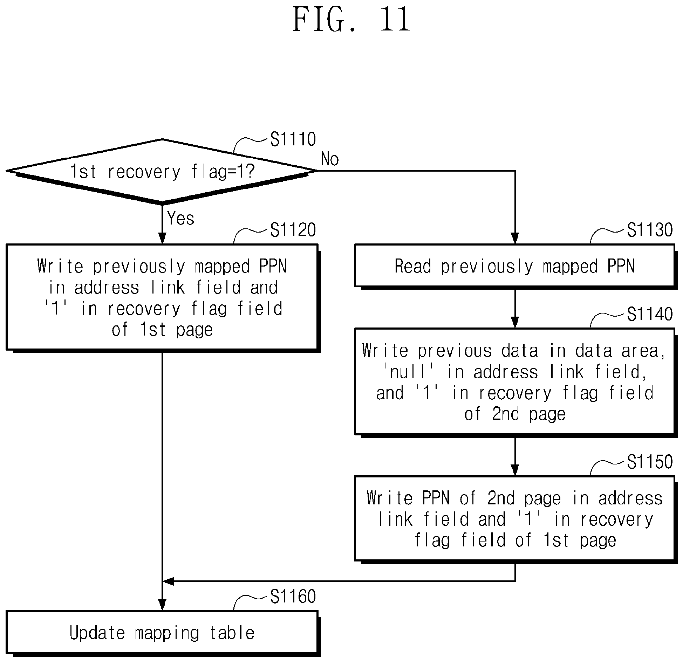

FIG. 11 is a flowchart for describing an operation of writing an address to original data according to some example embodiments, which is described with reference to FIG. 10. Referring to FIG. 11, the storage controller 110 may determine whether a first recovery flag of the logical address corresponding to the write request received from the host device 11 is set to a logical value of "1" (S1110).

In some example embodiments, when a write request is received from a tenant corresponding to the warning status, the storage controller 110 sets the first recovery flag of the logical address corresponding to the write request to a logical value of "1" in the process of updating the mapping table MT. Accordingly, when the first recovery flag corresponding to the received write request includes a logical value of "1", data written at a previous page may correspond to data written in the warning status. It may be determined that the second recovery flag of the previous page is set to a logical value of "1" . For example, the logical value of "1" may have been written in the recovery flag field of the spare area of the previous page.

In some example embodiments, when the first recovery flag corresponding to the received write request includes a logical value of "0", the data written at the previous page may correspond to data written in the normal status, not the warning status. It may be determined that the second recovery flag of the previous page is set to a logical value of "0". For example, the logical value of "0" may have been written in the recovery flag field of the spare area of the previous page. There may be a need to write a logical value of "1" in the second recovery flag for the purpose of indicating that the previous page is a page capable of being used for data recovery. However, in some example embodiments, the in-place overwrite for the page included in the non-volatile memory 120 is restricted. Accordingly, to perform the overwrite, data may be written at a new page, and the mapping table may be updated such that the logical address is mapped to a physical address of the new page.

In some example embodiments, when it is determined that the first recovery flag of the logical address corresponding to the received write request includes a logical value of "1" (Yes in operation S1110), the storage controller 110 may write a previously mapped physical address PPN in the address link field of the first page and may write a logical value of "1" in the recovery flag field thereof (S1120). For example, the storage controller 110 may set the address link of the first page to the previously mapped physical address and may set a second recovery flag of the first page to a logical value of "1". The storage controller 110 may write the address link set to the previously mapped physical address in the address link field of the spare area of the first page and may write the second recovery flag set to "1" in the recovery flag field of the spare area of the first page.

In some example embodiments, when it is determined that the first recovery flag of the logical address corresponding to the received write request includes a logical value of "0" (No in operation S1110), the storage controller 110 may perform the read operation with respect to the previously mapped physical page address PPN (S1130). As such, the storage controller 110 may obtain data of the previously mapped physical address.

In some example embodiments, the storage controller 110 may write the previous data obtained from the previously mapped physical address in the data area of a second page different from the first page, may write the null value in the address link field of the spare area of the second page, and may write a logical value of "1" in the recovery flag field of the spare area of the second page (S1140). For example, a logical value of the second recovery flag corresponding to the previous data may be changed from "0" to "1". For example, the storage controller 110 may set the address link of the second page to the null value and may set a second recovery flag of the second page to a logical value of "1". The storage controller 110 may write the address link set to the null value in the address link field of the spare area of the second page and may write the second recovery flag set to "1" in the recovery flag field of the spare area of the second page.

In some example embodiments, the storage controller 110 may write the physical address PPN of the second page in the address link field of the spare area of the first page and may write "1" in the recovery flag field of the spare area of the first page (S1150). For example. The storage controller 110 may set address link of the first page to the physical address of the second page and may set a second recovery flag of the first page to a logical value of "1". The storage controller 110 may write the address link set to the physical address of the second page in the address link field of the spare area of the first page and may write the second recovery flag set to "1" in the recovery flag field of the spare area of the first page.

Afterwards, in some example embodiments, when the recovery manager 111c of the storage controller 110 recovers data, that the second page is a page to be used for data recovery may be determined by checking a logical value of "1" written in the recovery flag field of the spare area of the second page.

After the storage controller 110 completes the data write operation for the first page (i.e., completes operation S1150), the storage controller 110 may update the mapping table (S1160). Operation S1160 may correspond to operation S1050 of FIG. 10.

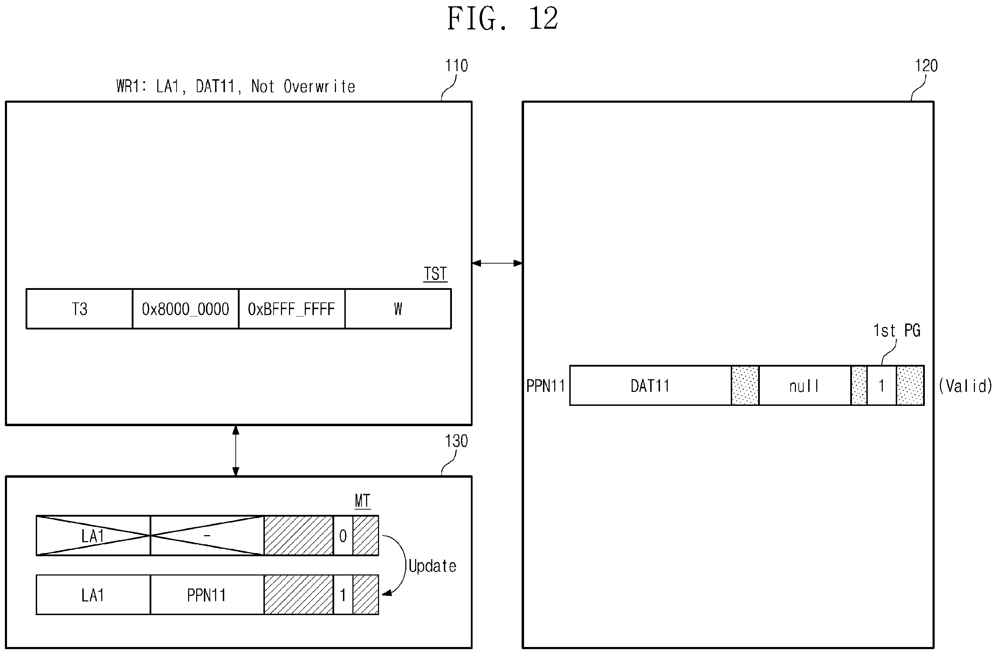

FIG. 12 is a diagram for describing an example of an operation of a storage controller described with reference to FIG. 9 according to some example embodiments. Referring to FIG. 12, the storage controller 110 may receive the first write request WR1 for writing data DAT11 at the logical address LA1 from the host device 11.

It is assumed that the logical address LA1 is included in a range of continuous logical addresses allocated to the third tenant T3.

In some example embodiments, the storage controller 110 may check the status of the third tenant T3 corresponding to the logical address LA1 based on the tenant status table TST. The storage controller 110 may write recovery information for data recovery in the non-volatile memory 120, based on the status value of the third tenant T3 indicating the warning status "W".

In some example embodiments, the storage controller 110 may read the mapping table MT to write the recovery information in the non-volatile memory 120. The storage controller 110 may determine that an invalid page is mapped to the logical address LA1, for example, may determine that the first write request WR1 does not correspond to the overwrite.

In some example embodiments, the storage controller 110 may write the data DAT11 corresponding to the first write request WR1 in the data area of a first page 1st PG corresponding to a physical page address PPN11, may write the null value in the address link field of the spare area of the first page 1st PG, and may write a logical value of "1" in the recovery flag field of the spare area thereof. For example, the first page 1st PG corresponding to the physical page address PPN11 is a valid page in which valid data are stored.

In some example embodiments, the storage controller 110 may update the mapping table MT such that the physical page address PPN11 and the logical address LA1 are mapped. For example, the first flag corresponding to the logical address LA1 may be set to a logical value of "1".

In some example embodiments, the data DAT11 that are data newly written after the status of the third tenant T3 is changed to the warning status "W" correspond to original data. Afterwards, in some example embodiments, assuming that the overwrite is performed with respect to the logical address LA1, the data DAT11 being original data associated with the logical address LA1 may be recovered when the storage controller 110 performs data recovery.

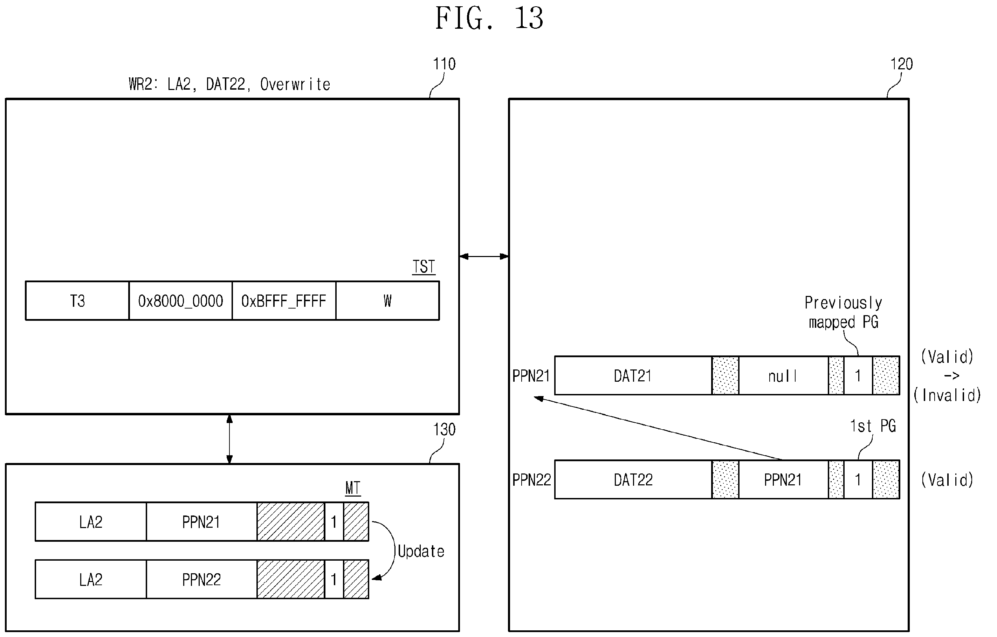

FIG. 13 is a diagram for describing an example of an operation of a storage controller according to some example embodiments, which is described with reference to FIG. 10. Referring to FIG. 13, the storage controller 110 may receive the second write request WR2 for writing data DAT22 at the logical address LA2 from the host device 11.

It is assumed that the logical address LA2 is included in a range of continuous logical addresses allocated to the third tenant T3.

In some example embodiments, the storage controller 110 may check the status of the third tenant T3 corresponding to the logical address LA2 based on the tenant status table TST. The storage controller 110 may write recovery information for data recovery in the non-volatile memory 120, based on the status value of the third tenant T3 indicating the warning status "W".

In some example embodiments, the storage controller 110 may read the mapping table MT to write the recovery information in the non-volatile memory 120. The storage controller 110 may determine that a physical page address PPN21 of a valid page is mapped to the logical address LA2, that is, may determine that the second write request WR2 corresponds to the overwrite. For example, the page of the physical page address PPN21 previously mapped to the logical address LA2 corresponds to a valid page, and data DAT21 stored in the data area thereof corresponds to valid data. In this case, the second write request WR2 received from the host device 11 is a request for changing the data DAT21 being valid data to data DAT22, and the storage controller 110 may determine that the second write request WR2 corresponds to the overwrite.

The storage controller 110 may determine that the first recovery flag of the logical address LA2 includes a logical value of "1", based on the mapping table MT.

The storage controller 110 may write the physical page address PPN21 previously mapped to the logical address LA2 in the address link of the spare area of the first page 1st PG and may write a logical value of "1" in the second recovery flag thereof.

The storage controller 110 may update the mapping table MT such that the previous mapping relationship between the logical address LA2 and the physical page address PPN21 is changed to a mapping relationship between the logical address LA2 and the physical page address PPN22. For example, the first flag corresponding to the logical address LA2 may be maintained with "1". The page of the previously mapped physical page address PPN21 may be changed from a valid page to an invalid page. Because the page of the physical page address PPN21 is a page including original data or an address link to the original data, the address link of the physical page address PPN22 and the physical page address PPN21 may be used for the recovery manager 111c of the storage controller 110 to perform data recovery associated with the logical address LA2.

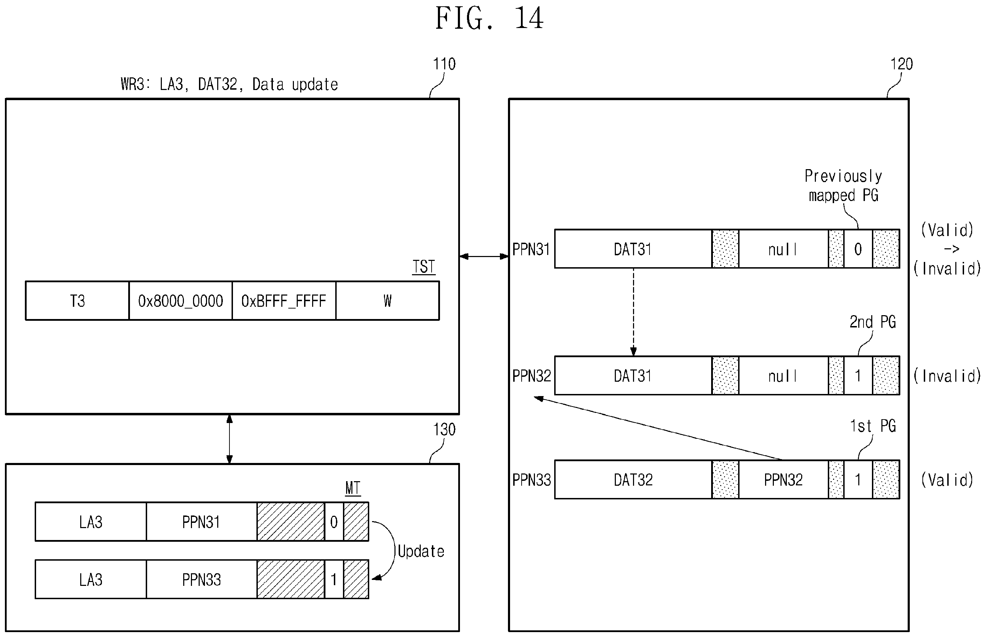

FIG. 14 is a diagram for describing another example of an operation of a storage controller according to some example embodiments, which is described with reference to FIG. 10. Referring to FIG. 14, the storage controller 110 may receive the third write request WR3 for writing data DAT32 at the logical address LA3 from the host device 11.

It is assumed that the logical address LA3 is included in a range of continuous logical addresses allocated to the third tenant T3.

In some example embodiments, the storage controller 110 may check the status of the third tenant T3 corresponding to the logical address LA3 based on the tenant status table TST. The storage controller 110 may write recovery information for data recovery in the non-volatile memory 120, based on the status value of the third tenant T3 indicating the warning status "W".

In some example embodiments, the storage controller 110 may read the mapping table MT to write the recovery information in the non-volatile memory 120. The storage controller 110 may determine that a physical page address PPN31 of a valid page is mapped to the logical address LA3, that is, may determine that the third write request WR3 corresponds to the overwrite.

The storage controller 110 may determine that the first recovery flag of the logical address LA3 includes a logical value of "0", based on the mapping table MT.

The storage controller 110 may perform the read operation with respect to the previously mapped physical page address PPN31 for the purpose of setting the second recovery flag corresponding to data DAT31 to a logical value of "1". The storage controller 110 may write the data DAT31 obtained through the read operation for the physical page address PPN31 in the data area of a second page 2nd PG corresponding to a physical page address PPN32, may write the null value in the address link of the spare area of the second page 2nd PG, and may write a logical value of "1" in the second recovery flag of the spare area thereof. The second page 2nd PG may be a page different from the first page 1st PG from among a plurality of free pages of the non-volatile memory 120, in which data write is possible.

The storage controller 110 may write the data DAT32 corresponding to the third write request WR3 in the data area of the first page 1st PG, may write the physical page address PPN32 of the second page 2nd PG in the address link of the spare area of the first page 1st PG, and may write a logical value of "1" in the second recovery flag of the spare area thereof.

In some example embodiments, the storage controller 110 may update the mapping table MT such that the previous mapping relationship between the logical address LA3 and the physical page address PPN31 is changed to a mapping relationship between the logical address LA3 and the physical page address PPN33. For example, the first recovery flag corresponding to the logical address LA3 may be set to a logical value of "1". The page of the previously mapped physical page address PPN31 may be changed from a valid page to an invalid page. The second page 2nd PG where the data DAT31 are written may be an invalid page. Because the second page 2nd PG is a page including original data or an address link to the original data, the address link of the physical page address PPN33 and the physical page address PPN32 may be used for the recovery manager 111c of the storage controller 110 to perform data recovery associated with the logical address LA3.

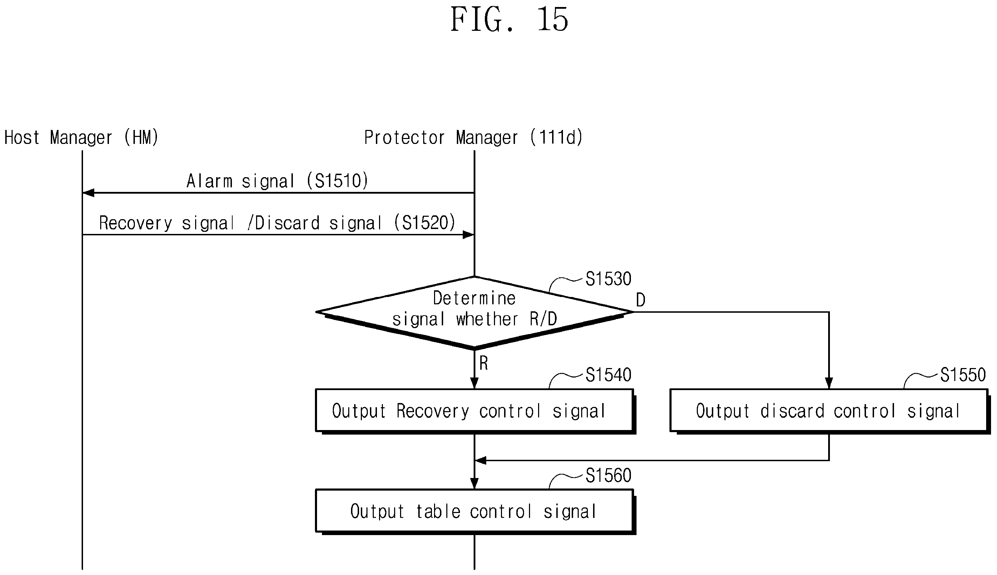

FIG. 15 is a diagram illustrating communication between a host manager and a protector manager of FIG. 4 according to some example embodiments. Referring to FIG. 15, the protector manager 111d may transmit an alarm signal to the host manager HM (S1510). For example, the protector manager 111d may transmit the alarm signal in a situation where data recovery is performed based on the recovery information or in a situation where there is a need to discard the recovery information.

For example, when the capacity of the recovery information is greater than or equal to a reference value, the protector manager 111d may transmit the alarm signal. Because the recovery information is managed in a recovery region including invalid pages and is maintained until data recovery is performed or is discarded, the recovery information may occupy the capacity of the non-volatile memory 120. Alternatively, when the available capacity of the non-volatile memory 120 is smaller than or equal to a reference value, the protector manager 111d may transmit the alarm signal. In some example embodiments, to secure the available capacity of the non-volatile memory 120, there is a need to perform an operation for securing the capacity necessary for storing the recovery information. Alternatively, when the status of the tenant is changed to the normal status based on a result of detecting the ransomware attack, the protector manager 111d may transmit the alarm signal. When the status of the tenant is changed to the normal status, because there is no need to maintain the recovery information, it may be necessary to discard the recovery information to secure the available capacity.

In some example embodiments, the host manager HM may notify an administrator of the received alarm signal and may receive information indicating to perform or discard data recovery from the administrator. The host manager HM may transmit a recovery signal or a discard signal to the protector manager 111d (S1520).

The protector manager 111d may determine whether a signal received from the host manager HM is the recovery signal or the discard signal (S1530).

For example, when it is determined that the signal received from the host manager HM is the recovery signal (R in operation S1530), the protector manager 111d may output a recovery control signal (S1540). For example, when the recovery control signal is received, the recovery manager 111c may recover data associated with a tenant by using the recovery information.

For example, when it is determined that the signal received from the host manager HM is the discard signal (D in operation S1530), the protector manager 111d may output a discard control signal (S1550). The recovery manager 111c may discard the recovery information in response to the discard control signal.

In some example embodiments, the protector manager 111d may output a table control signal for updating the status value of the tenant of the tenant status table (S1560). The tenant status table manager 111b may update the status value of the tenant status table based on the table control signal.

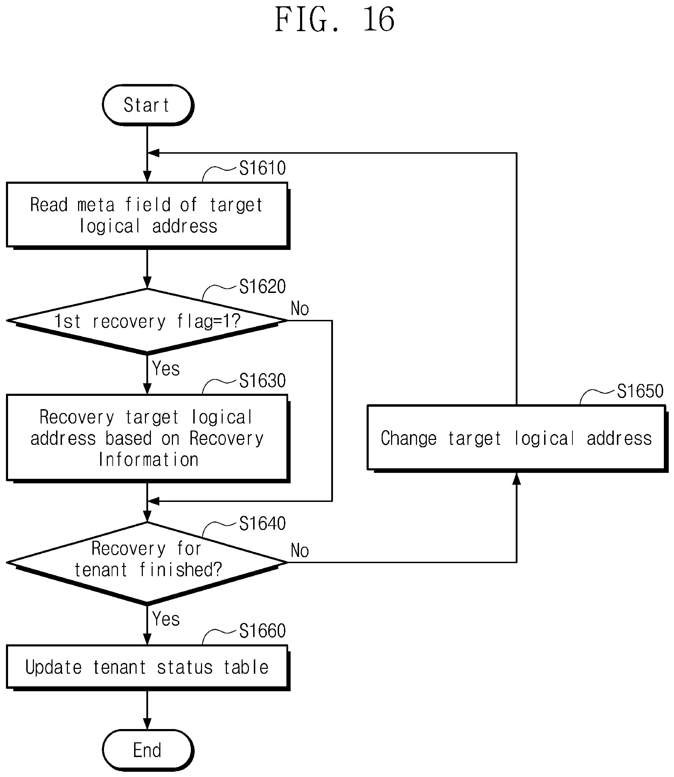

FIG. 16 is a flowchart for describing an operation in which a storage controller of FIG. 4 recovers data according to some example embodiments. Referring to FIG. 16, the storage system 10 may read the meta field of the target logical address in the mapping table MT (S1610). In some example embodiments, the target logical address is one of a plurality of logical addresses allocated to a tenant targeted for data recovery.

The storage controller 110 may determine whether the first recovery flag 1st RF of the target logical address includes a logical value of "1" (S1620).

For example, when it is determined that the first recovery flag 1st RF of the target logical address includes a logical value of "1" (Yes in operation S1620), the storage controller 110 recovers data of the target logical address to original data based on recovery information (S1630).

For example, when it is determined that the first recovery flag 1st RF does not include a logical value of "1" (No in operation S1620), the storage controller 110 may determine whether the recovery operation for the tenant is finished (S1640).

In some example embodiments, when it is determined that the recovery operation for the tenant is not finished (No in operation S1640), the storage controller 110 may newly set (e.g., change) the target logical address to any other logical address not set to the target logical address (S1650). The storage controller 110 may read the meta field of the newly set target logical address in the mapping table MT (S1610).

In some example embodiments, when it is determined that the recovery operation for the tenant is finished (Yes in operation S1640), the storage controller 110 may update the tenant status table (S1660). Operation S1660 may correspond to operation S1560 of FIG. 15.

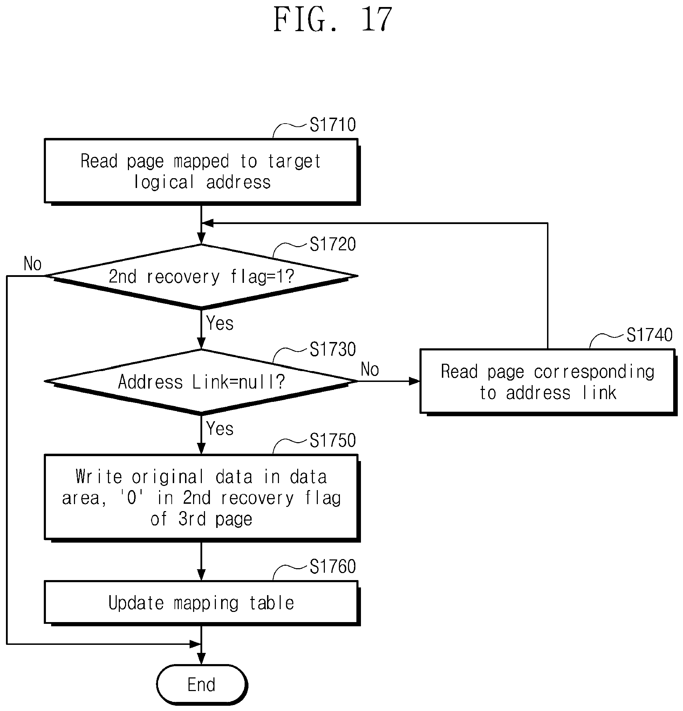

FIG. 17 is a flowchart for describing an operation of FIG. 16 according to some example embodiments, in which a storage controller recovers original data associated with a target logical address based on recovery information. Referring to FIG. 17, the storage controller 110 may read a page mapped to the target logical address (S1710).

The storage controller 110 may determine whether the second recovery flag of the mapped page includes a logical value of "1" (S1720).

For example, when it is determined that the second recovery flag of the mapped page includes a logical value of "1" (Yes in operation S1720), the storage controller 110 may determine whether the address link includes the null value (S1730).

When it is determined that the address link does not include the null value (No in operation S1730), the storage controller 110 may read a page corresponding to the address link (S1740). The storage controller 110 may determine whether the second recovery flag of the read page includes a logical value of "1" (S1720).

For example, the storage controller 110 may read a page of original data, that is, a page where the second recovery flag 2nd RF includes a logical value of "1" and the address link includes the null value. The storage controller 110 may obtain the original data.

In some example embodiments, when it is determined that the address link includes the null value (Yes in operation S1730), the storage controller 110 may write the original data stored in the data area of the read page in the data area of a third page and may write "0" in the second recovery flag of the third page (S1750).

The storage controller 110 may update a mapping table (S1760). For example, the storage controller 110 may update the mapping table such that the target logical address is mapped to a physical page address of the third page. For example, the first recovery flag of the target logical address may be set to a logical value of "0".

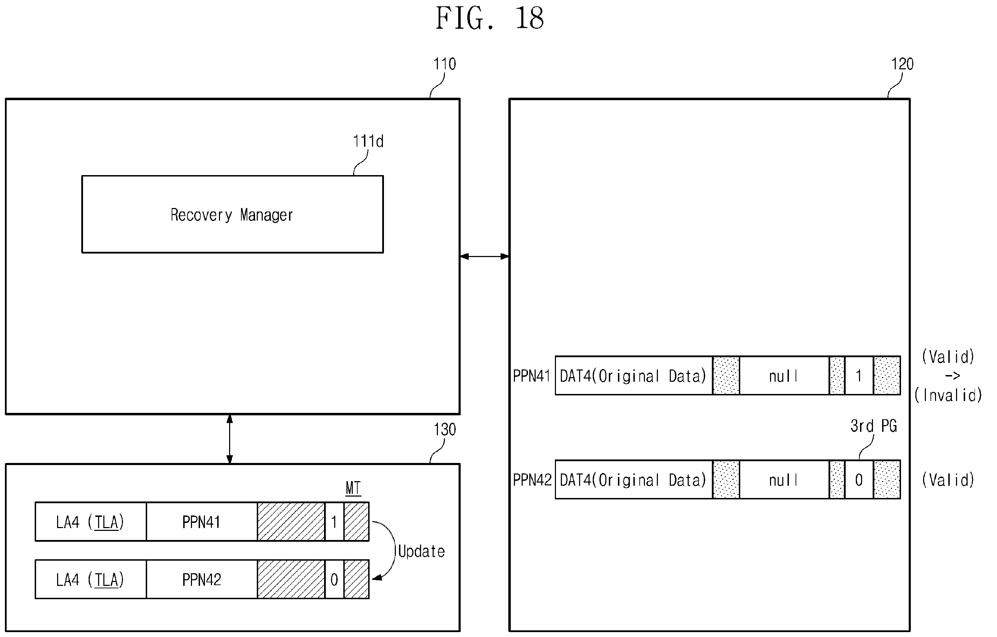

FIG. 18 is a diagram for describing an example of an operation of a storage controller according to some example embodiments, which is described with reference to FIG. 17. Referring to FIG. 18, the storage controller 110 may read the meta field of the logical address LA4 being a target logical address TLA from the mapping table MT loaded to the buffer memory 130. The storage controller 110 may determine whether the first recovery flag of the meta field of the logical address LA4 includes a logical value of "1".

According to some example embodiments, because the first recovery flag of the logical address LA4 is determined as including a logical value of "1", the storage controller 110 may recover data of the logical address LA4 as original data.

In some example embodiments, to recover the data of the logical address LA4 as original data, the storage controller 110 may perform the read operation with respect to a physical page address PPN41 mapped to the logical address LA4.

For example, the storage controller 110 may determine whether the second recovery flag written in the recovery flag field of the spare area of the physical page address PPN41 includes a logical value of "1". Because it is determined that the second recovery flag of the physical page address PPN41 includes a logical value of "1", the storage controller 110 may determine whether the address link written in the address link field of the spare area of the physical page address PPN41 includes the null value. Because it is determined that the address link of the spare area of the physical page address PPN41 includes the null value, data DAT4 in the data area of the physical page address PPN41 correspond to original data.

In some example embodiments, the storage controller 110 may write the data DAT4 being the original data in the data area of a third page 3rd PG corresponding to a physical page address PPN42 and may write the second recovery flag set to a logical value of "0" in the recovery flag field of the spare area of the third page 3rd PG. The third page 3rd PG may be one of a plurality of pages in which data write is possible. Because the data of the logical address LA4 are recovered as the original data by using the recovery information, the physical page address PPN42 is not used for data recovery. Accordingly, a page where the second recovery flag includes a logical value of "0" may mean that the page is not used for data recovery.

In some example embodiments, the storage controller 110 may update the mapping table MT such that the mapping relationship between the logical address LA4 and the physical page address PPN41 is changed to a mapping relationship between the logical address LA4 and the physical page address PPN42. In this case, the first recovery flag corresponding to the logical address LA4 may be set to a logical value of "0".

The data recovery described with reference to FIG. 18 may be performed as a background operation by the recovery manager 111c included in the storage controller 110.

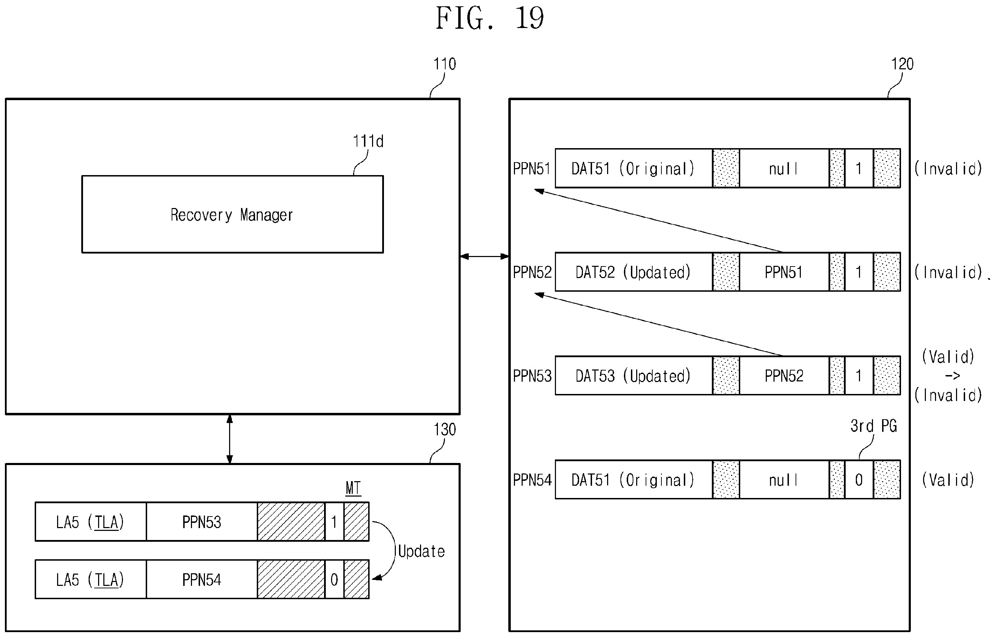

FIG. 19 is a diagram for describing another example of an operation of a storage controller, which is described with reference to FIG. 17, according to some example embodiments. Referring to FIG. 19, the storage controller 110 may read the meta field of the logical address LA5 being the target logical address TLA from the mapping table MT loaded to the buffer memory 130. The storage controller 110 may determine whether the first recovery flag of the meta field of the logical address LA5 includes a logical value of "1".

Because the first recovery flag of the logical address LA5 is determined as including a logical value of "1", the storage controller 110 may recover data of the logical address LA5 as original data. In some example embodiments, to recover the data of the logical address LA5 as original data, the storage controller 110 may perform the read operation with respect to a physical page address PPN53 mapped to the logical address LA5.

In some example embodiments, the storage controller 110 may determine whether the second recovery flag of the spare area of the physical page address PPN53 includes a logical value of "1". Because it is determined that the second recovery flag of the physical page address PPN53 includes "1", the storage controller 110 may determine whether the address link of the spare area of the physical page address PPN53 includes the null value.

Because it is determined that the address link of the spare area of the physical page address PPN53 includes not the null value but a physical page address PPN52, the storage controller 110 may perform the read operation with respect to the physical page address PPN52 included in the address link.

Because it is determined that the second recovery flag of the spare area of the physical page address PPN52 includes a logical value of "1", the storage controller 110 may perform the read operation with respect to a physical page address PPN51 included in the address link.

Because it is determined that the second recovery flag of the spare area of the physical page address PPN51 includes a logical value of "1" and it is determined that the address link of the spare area of the physical page address PPN51 includes the null value, data DAT51 stored in the data area of the physical page address PPN51 correspond to original data. In this case, data DAT52 and data DAT53 correspond to data updated by the overwrite.

In some example embodiments, the storage controller 110 may write the data DAT51 being the original data in the data area of the third page 3rd PG corresponding to a physical page address PPN54 and may write the second recovery flag 2nd RF set to a logical value of "0" in the recovery flag field of the spare area of the third page 3rd PG corresponding to the physical page address PPN54.

In some example embodiments, the storage controller 110 may update the mapping table MT such that the mapping relationship between the logical address LA5 and the physical page address PPN53 is changed to a mapping relationship between the logical address LA5 and the physical page address PPN54. For example, the first recovery flag corresponding to the logical address LA5 may be set to a logical value of "0".

The data recovery described with reference to FIG. 19 may be performed as a background operation by the recovery manager 111c included in the storage controller 110.

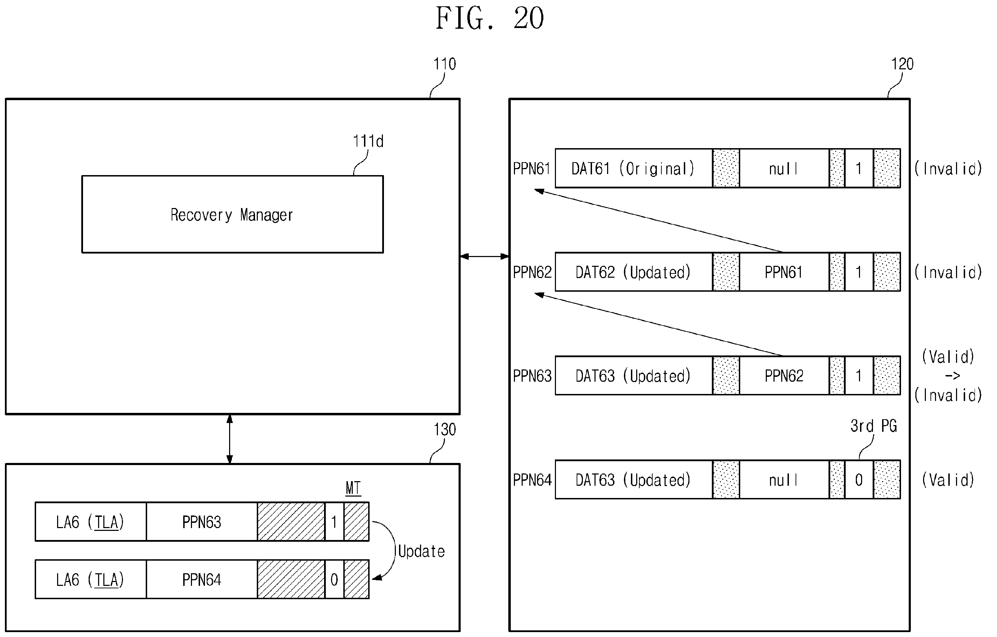

FIG. 20 is a diagram for describing an operation of FIG. 15 according to some example embodiments, in which a storage controller discards recovery information based on a received discard signal. Referring to FIG. 20, the storage controller 110 may discard the recovery information stored in the non-volatile memory 120.

As shown in FIG. 15, when it is determined that there is no need to maintain the recovery information to cope with the ransomware attack, the host manager HM may transmit the discard signal to the protector manager 111d. The protector manager 111d may output a discard control signal in response to the discard signal.

The recovery manager 111d included in the storage controller 110 may control the storage controller 110 to discard the recovery information stored in the non-volatile memory 120 in response to the discard control signal. The storage controller 110 may discard the following information stored in the non-volatile memory 120: original data, information about a link to the original data, and information about a second recovery flag.

For example, as shown in FIG. 20, the storage controller 110 may perform the read operation with respect to a physical page address PPN63 mapped to the logical address LA6 being the target logical address TLA. A page of the physical page address PPN63 may store data DAT63 being data updated through the latest overwrite. The storage controller 110 may write the data DAT63 in the data area of the third page 3rd PG corresponding to a physical page address PPN64 and may write a logical value of "0" in the second recovery flag of the spare area of the third page 3rd PG.

The storage controller 110 may update the mapping table MT such that the mapping relationship between the logical address LA6 and the physical page address PPN63 is changed to a mapping relationship between the logical address LA6 and the physical page address PPN64. In this case, the first recovery flag corresponding to the logical address LA6 may be set to a logical value of "0".

After the recovery information about the tenant is completely discarded, the status value of the tenant in the tenant status table may be updated. For example, after the recovery information is discarded, the status of the tenant may be updated to be changed to the normal status. The storage controller 110 may secure the available capacity of the non-volatile memory 120 by returning a page storing invalid data to a page capable of storing data, through the garbage collection operation.

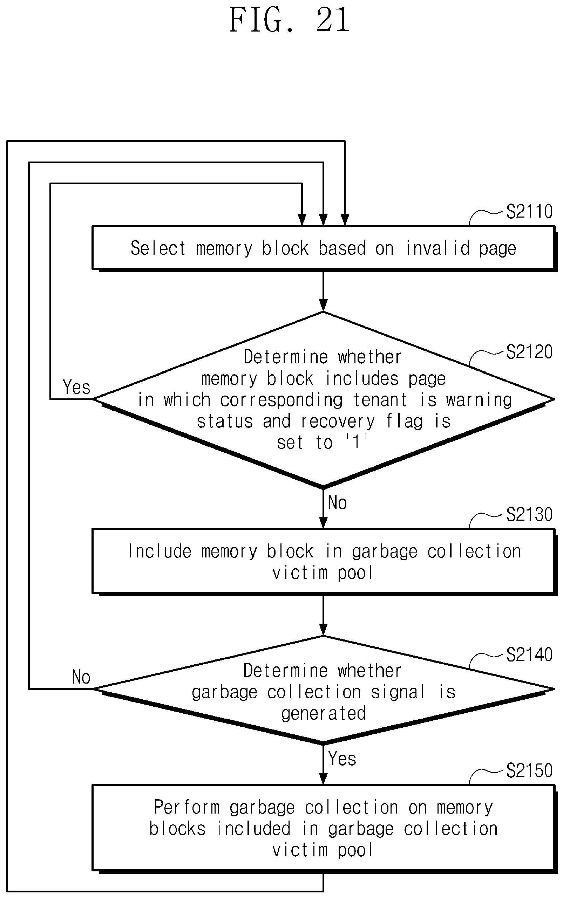

FIG. 21 is a flowchart for describing an operation in which a storage controller of FIG. 1 performs garbage collection according to some example embodiments. Referring to FIG. 21, the storage controller 110 may select a memory block based on an invalid page (S2110).

The storage controller 110 may determine whether the selected memory block includes a page satisfying the following from among a plurality of pages included in the selected memory block: for example, a page in which a corresponding tenant is in the warning status and a logical value of "1" is written in the second recovery flag of the spare area (S2120).

For example, when it is determined that the memory block includes the page in which the corresponding tenant is in the warning status and a logical value of "1" is written in the second recovery flag of the spare area (Yes in operation S2120), the storage controller 110 may select another memory block based on the invalid page (S2110).

For example, when it is determined that the memory block does not include the page in which the corresponding tenant is in the warning status and a logical value of "1" is written in the second recovery flag of the spare area (No in operation S2120), the storage controller 110 may include the memory block in a garbage collection victim pool (S2130).

The storage controller 110 may determine whether a garbage collection signal indicating to perform the garbage collection operation is generated (S2140).

When the garbage collection signal is not generated (No in operation S2140), the storage controller 110 may select another memory block based on an invalid page (S2110).

When the garbage collection signal is generated (Yes in operation S2140), the storage controller 110 may perform the garbage collection operation on one or more memory blocks included in the garbage collection victim pool (S2150).

According to some example embodiments, the storage controller 110 may perform the garbage collection operation as a background operation.

In some example embodiments, a page in which a corresponding tenant is in the warning status and a logical value of "1" is written in the recovery flag (e.g., the first recovery flag or the second recovery flag) corresponds to an invalid page but corresponds to a page where recovery information used for data recovery is written. Accordingly, the recovery information may be erased by performing the garbage collection operation on a memory block including a page in which a corresponding tenant is in the warning status and a logical value of "1" is written in the recovery flag, and thus, an operation of performing data recovery may be restricted. The storage controller 110 may not include a memory block, which includes a page in which a corresponding tenant is in the warning status and a logical value of "1" is written in the recovery flag, in the garbage collection victim pool and thus may maintain the recovery information stored in the non-volatile memory 120.

When data corresponding to the tenant are recovered or recovery information is discarded, the status of the tenant may be changed to any other status, not the warning status. For example, after data recovery for the tenant is completed, the status of the tenant may be changed to the normal status. When a page in which recovery information that is not used any longer is written is in the normal status, the storage controller 110 may secure the available capacity of the non-volatile memory 120 by performing the garbage collection operation on the page.

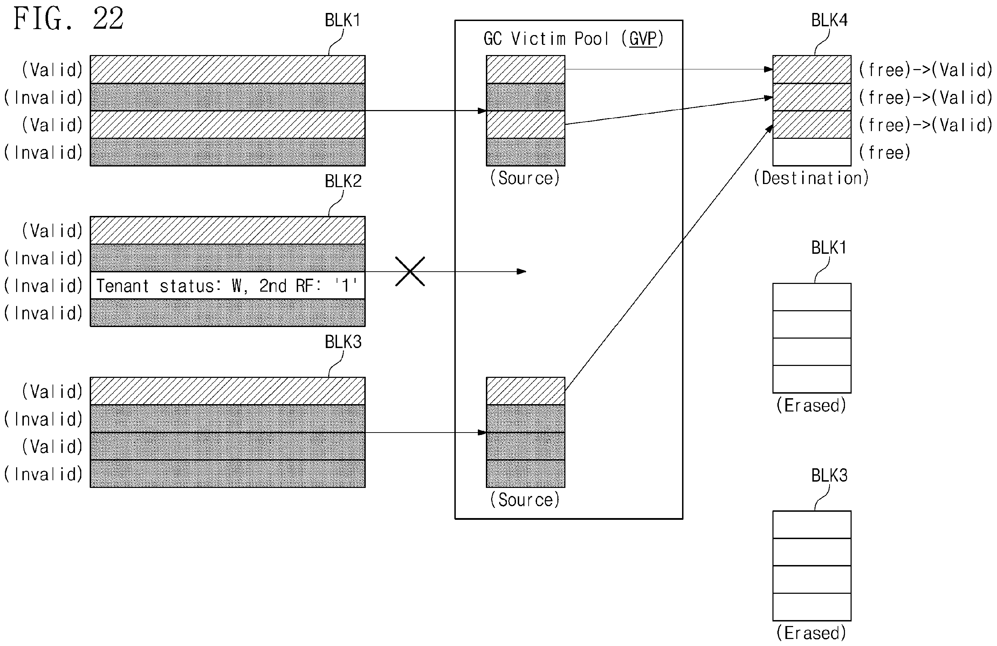

FIG. 22 is a diagram for describing an operation of a storage controller, which is described with reference to FIG. 21 according to some example embodiments. Referring to FIG. 22, the non-volatile memory 120 may include memory blocks BLK1, BLK2, BLK3, and BLK4.

For example, the storage controller 110 may select the memory block BLK1 including an invalid page from among the plurality of memory blocks BLK1 to BLK3.

For example, the storage controller 110 may determine that the memory block BLK1 does not include a page in which a corresponding tenant is in the warning status and a logical value of "1" is written in the recovery flag. The storage controller 110 may include the memory block BLK1 in the garbage collection victim pool.

The storage controller 110 may select the memory block BLK2 including an invalid page from among the plurality of memory blocks BLK1 to BLK3. The storage controller 110 may determine that the memory block BLK2 determines a page in which a corresponding tenant is in the warning status and a logical value of "1" is written in the recovery flag. The storage controller 110 may not include the memory block BLK2 in the garbage collection victim pool and may select the memory block BLK3.

The storage controller 110 may determine that the memory block BLK3 does not include a page in which a corresponding tenant is in the warning status and a logical value of "1" is written in the recovery flag. The storage controller 110 may include the memory block BLK3 in the garbage collection victim pool.

The storage controller 110 may determine whether the garbage collection signal is generated. When it is determined that the garbage collection signal is generated, the storage controller 110 may perform the garbage collection operation on the memory blocks BLK1 and BLK3 included in the garbage collection victim pool.

The storage controller 110 may set the memory block BLK1 to a source memory block and may write a valid page included in the memory block BLK1 in the destination memory block BLK4. Also, the storage controller 110 may set the memory block BLK3 to a source memory block and may write a valid page included in the memory block BLK3 in the destination memory block BLK4.

In some example embodiments, after writing the valid page in the destination memory block BLK4, the storage controller 110 may perform the erase operation on the memory block BLK1 and the memory block BLK3. The storage controller 110 may secure the available capacity of the non-volatile memory 120 by performing the garbage collection operation on the memory block BLK1 and the memory block BLK3 and may not perform the garbage collection operation on the memory block BLK2 including the page in which the corresponding tenant is in the warning status and a logical value of "1" is written in the recovery flag. As such, the recovery information may be maintained in the non-volatile memory 120.

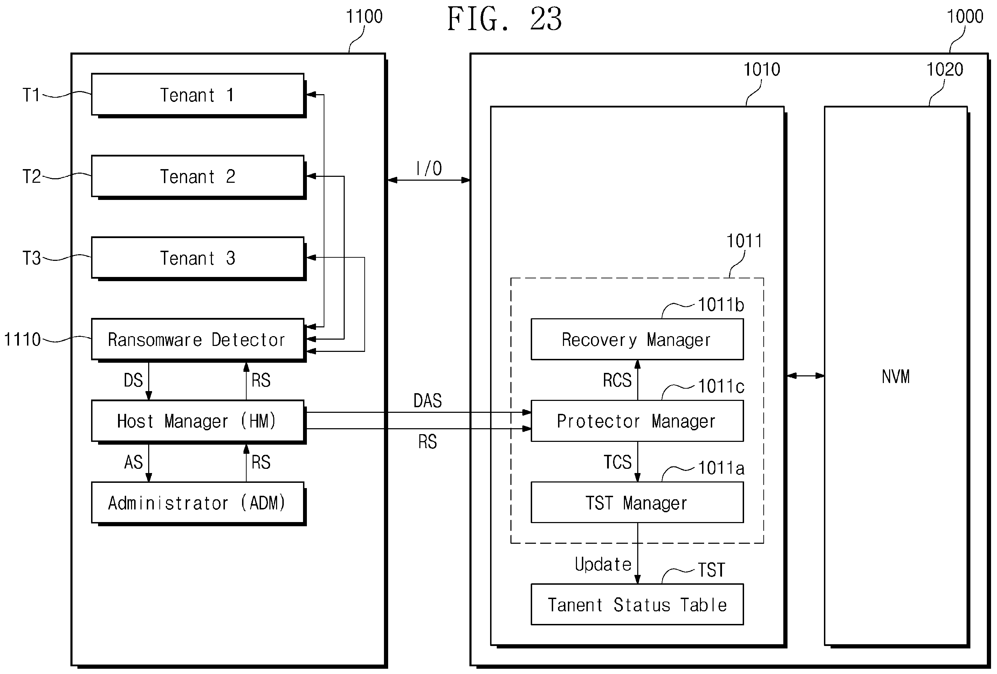

FIG. 23 is a block diagram for another example of a storage system according to some example embodiments. Referring to FIG. 23, a host 1100 may include a ransomware detector 1110. The ransomware detector 1110 may detect the ransomware attack on the plurality of tenants T1 to T3 executed in the host 1100 by various methods. For example, the ransomware detector 1110 may detect the ransomware attack through the following: behavior-based detection, anti-virus software, endpoint detection and response (EDR), network traffic analysis, or file integrity monitoring (FIM), but example embodiments are not limited thereto.

In some example embodiments, the ransomware detector 1110 may transmit the detection signal DS to the host manager HM. The host manager HM may transmit the alarm signal AS to the administrator ADM. The host manager HM may transmit a detection alarm signal DAS to a protector manager 1011c included in a write protector 1011. The protector manager 1011c may transmit the table control signal TCS to a tenant status table manager 1011a based on the detection alarm signal DAS received from the host manager HM. The tenant status table manager 1011a may update the tenant status table TST in response to the table control signal TCS.

For example, when the ransomware attack on the second tenant T2 is detected, the ransomware detector 1110 may output the detection alarm signal DAS providing notification that the ransomware attack on the second tenant T2 is detected. The protector manager 1011c may receive the detection alarm signal DAS. The protector manager 1011c may output the table control signal TCS based on the detection alarm signal DAS such that the status value of the second tenant T2 is updated to the protection status. The tenant status table manager 1011a may receive the table control signal TCS. The tenant status table manager 1011a may update the tenant status table TST based on the table control signal TCS such that the status value of the second tenant T2 is changed to the protection status.

In some example embodiments, when the ransomware attack on the third tenant T3 is suspicious, the ransomware detector 1110 may output the detection alarm signal DAS providing notification that the ransomware attack on the third tenant T3 is suspicious. The protector manager 1011c may output the table control signal TCS based on the received detection alarm signal DAS. The tenant status table manager 1011a may update the tenant status table TST based on the table control signal TCS such that the status value of the third tenant T3 is changed to the warning status.

In some example embodiments, when a storage controller 1010 receives a write request for the second tenant T2 from the host 1100 as an input/output I/O, the storage controller 1010 may operate in the read-only mode and may not perform the write operation corresponding to the write request. In some example embodiments, the storage controller 1010 receives a write request for the third tenant T3 from the host 1100 as an input/output I/O, the storage controller 1010 may together write recovery information for recovering original data in the process of performing the write operation of the non-volatile memory 1020.

In some example embodiments, when data recovery is required, the administrator ADM may output the recovery signal RS, and the host manager HM may transmit the recovery signal RS to the protector manager 1011c. The protector manager 1011c may output the recovery control signal RCS. A recovery manager 1011b may receive the recovery control signal RCS and may perform data recovery in response to the recovery control signal RCS. The recovery manager 1011b may perform data recovery as a background operation.

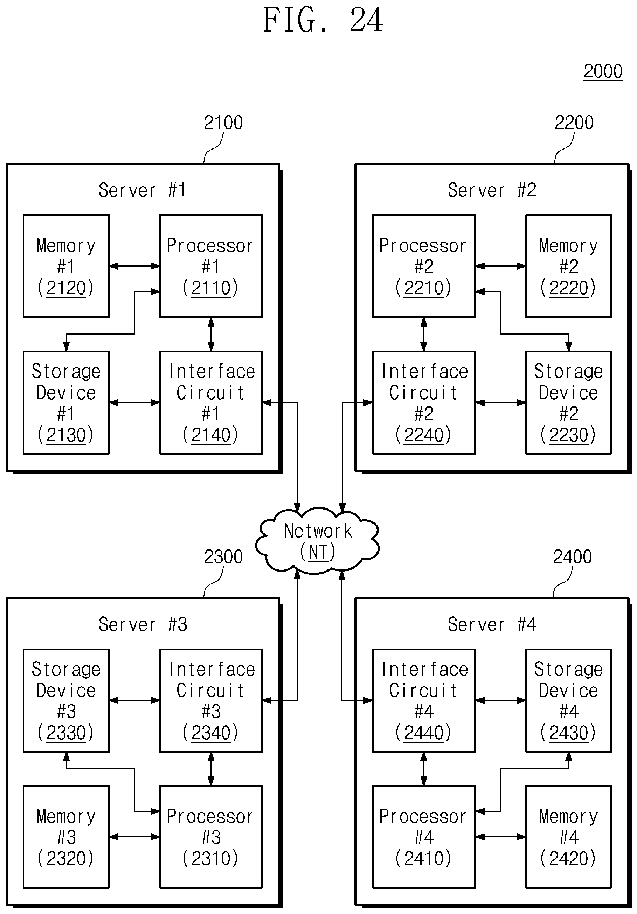

FIG. 24 is a block diagram illustrating a data center to which a storage system according to some example embodiments is applied. Referring to FIG. 24, a data center 2000 may include a plurality of computing nodes (or servers) 2100 to 2400. The plurality of computing nodes (or servers) 2100 to 2400 may communicate with each other over a network NT. In some example embodiments, the network NT may be a storage dedicated network such as a storage area network (SAN) or may be an Internet network such as TCP/IP, but example embodiments are not limited thereto. In some example embodiments, the network NT may include at least one of various communication protocols such as Fibre channel, iSCSI protocol, FCoE, NAS, and NVMe-oF, but example embodiments are not limited thereto.

The plurality of computing nodes (or servers) 2100 to 2400 may include processors 2110, 2210, 2310, and 2410, memories 2120, 2220, 2320, and 2420, storage devices 2130, 2230, 2330, and 2430, and interface circuits 2140, 2240, 2340, and 2440, but example embodiments are not limited thereto.

For example, the first computing node (or server) 2100 may include the first processor 2110, the first memory 2120, the first storage device 2130, and the first interface circuit 2140. In some example embodiments, the first processor 2110 may be implemented with a single core or a multi-core. The first memory 2120 may include a memory such as a DRAM, an SDRAM, an SRAM, a 3D XPoint memory, an MRAM, a PRAM, a FeRAM, or a ReRAM. The first memory 2120 may be used as a system memory, a working memory, or a buffer memory of the first computing node 2100, but example embodiments are not limited thereto. The first storage device 2130 may be a high-capacity storage medium such as a hard disk drive (HDD) or a solid-state drive (SSD). The first interface circuit 2140 may be a network interface controller (NIC) configured to support communication over the network NT.

In some example embodiments, the first processor 2110 of the first computing node (or server) 2100 may be configured to access the first memory 2120 based on a given memory interface. Alternatively, in some example embodiments of a shared memory architecture, the first processor 2110 of the first computing node (or server) 2100 may be configured to access the memories 2220, 2320, and 2420 of the remaining computing nodes (or servers) 2200, 2300, and 2400 over the network NT. The first interface circuit 2140 may include a network switch (not illustrated) configured to control or support an access to a shared memory (i.e., memories of any other computing nodes).

In some example embodiments, the first processor 2110 of the first computing node (or server) 2100 may be configured to access the first storage device 2130 based on a given storage interface. Alternatively, the first processor 2110 of the first computing node (or server) 2100 may be configured to access the storage devices 2230, 2330, and 2430 of the remaining computing nodes (or servers) 2200, 2300, and 2400 over the network NT. The first interface circuit 2140 may include a network switch (not illustrated) configured to control or support an access to storage devices 2230, 2330, and 2430 of any other computing nodes (or servers) 2200, 2300, and 2400. In some example embodiments, the storage devices 2130 to 2430 respectively included in the plurality of computing nodes (or servers) 2100 to 2140 may constitute one RAID volume, but example embodiments are not limited thereto. Operations of the second to fourth computing nodes (or servers) 2200 to 2400 may be similar to the operation of the first computing node (or server) 2100 as described above, and thus, additional description will be omitted to avoid redundancy.

In some example embodiments, various applications may be executed at the data center 2000. The applications may be configured to execute an instruction for data movement or copy between the computing nodes 2100 to 2400 or may be configured to execute instructions for combining, processing, or reproducing a variety of information present on the computing nodes (or servers) 2100 to 2400. In some example embodiments, the applications may be executed by one of the plurality of computing nodes (or servers) 2100 to 2400 included in the data center 2000, or the applications may be distributed and executed between the plurality of computing nodes (or servers) 2100 to 2400.

In some example embodiments, the data center 2000 may be used for high-performance computing (HPC) (e.g., finance, petroleum, materials science, meteorological prediction), an enterprise application (e.g., scale out database), and /or big data application (e.g., NoSQL database or in-memory replication), but example embodiments are not limited thereto.

In some example embodiments, at least one of the plurality of computing nodes (or servers) 2100 to 2400 may be an application server. For example, the application server may be configured to execute an application configured to perform various operations at the data center 2000. For example, at least one of the plurality of computing nodes (or servers) 2100 to 2400 may be a storage server. The storage server may be configured to store data that are generated or managed at the data center 2000.

In some example embodiments, the plurality of computing nodes (or servers) 2100 to 2400 included in the data center 2000 or portions thereof may be present at the same site or at sites physically separated from each other and may communicate with each other over network NT based on the wireless communication or wired communication based network NT. In some example embodiments, the plurality of computing nodes (or servers) 2100 to 2400 included in the data center 2000 may be implemented by the same memory technology or may be implemented by different memory technologies.

Although not illustrated in FIG. 24, in some example embodiments, at least a part of the plurality of computing nodes (or servers) 2100 to 2400 of the data center 2000 may communicate with an external client node (not illustrated) over the network NT or over any other communication interface (not illustrated). In some example embodiments, at least a part of the plurality of computing nodes 2100 to 2400 may automatically process a request (e.g., data store or data transfer) depending on a request of the external client node or may process the request at any other computing node.

In some example embodiments, the number of computing nodes (or servers) 2100 to 2400 included in the data center 2000 described with reference to FIG. 24 is non-limiting. Also, in each computing node (or server) 2100, 2200, 2300, and/or 2400, the number of processors, the number of memories, and the number of storage devices described with reference to FIG. 24 are non-limiting.

In some example embodiments, each of the plurality of computing nodes (or servers) 2100 to 2400 may be the host described with reference to FIGS. 1 to 23, and each of the plurality of storage devices 2130 to 2430 respectively included in the plurality of computing nodes (or servers) 2100 to 2400 may be the storage device configured to support the multi-tenancy described with reference to FIGS. 1 to 23. In some example embodiments, each of the plurality of storage devices 2130 to 2430 respectively included in the plurality of computing nodes 2100 to 2400 may be configured to protect data from the ransomware attack and to support data recovery, based on the operation method described with reference to FIGS. 1 to 23.

According to some example embodiments, to cope with a ransomware attack which encrypts data stored in a storage device and requires money in exchange for a decryption key necessary for decrypting the encrypted data, a storage device may write recovery information for data recovery depending on the status of a tenant in the processing of performing the write operation. The storage device may recover data based on the recovery information. Accordingly, a storage device which is capable of recovering original data in response to, or following, the ransomware attack and an operation method thereof are provided.

As described herein, any devices, electronic devise, modules, models, units, and/or portions thereof may include, may be included in, and/or may be implemented by one or more instances of processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a graphic processing unit (GPU), an application processor (AP), a digital signal processor (DSP), a microcomputer, a field programmable gate array (FPGA), a programmable logic unit, a microprocessor, application-specific integrated circuit (ASIC), a neural network processing unit (NPU), an Electronic Control Unit (ECU), and the like. In some example embodiments, the processing circuitry may include a non-transitory computer readable storage device (e.g., a memory), for example a solid state drive (SSD), storing a program of instructions, and a processor (e.g., CPU) configured to execute the program of instructions to implement the functionality and/or methods performed by some or all of any devices, electronic devices, modules, units, and/or portions thereof according to any of the example embodiments.

While inventive concepts have been shown and described with reference to some example embodiments thereof, it will be understood that various changes in form and details may be made therein without departing from the scope of the following claims.

## Claims

1. An operation method of a storage device (100), the method comprising:
detecting a ransomware attack on one or more tenants (T1, T2, T3), the one or more tenants being executed in a host device (11);
updating a tenant status table, TST, including a status of each of the one or more tenants (T1, T2, T3) based on a result of the detection;
in response to the storage device (100) receiving a write request from the host device (11), checking a status value of a tenant (T1; T2; T3) corresponding to the write request based on the TST and writing recovery information for data recovery in a non-volatile memory (120) of the storage device (100) based on a determination that the status value of the tenant (T1; T2; T3) corresponding to the write request from among the one or more tenants (T1, T2, T3) is a status value corresponding to a warning status from among a plurality of status values; and
performing the data recovery based on the recovery information, in response to receiving a recovery signal from the host device (11).

2. The method of claim 1, wherein the TST further includes a range of continuous logical addresses allocated to each of the one or more tenants (T1; T2; T3).

3. The method of claim 1 or 2, wherein a mapping table, MT, mapping a logical address and a physical address includes a first recovery flag.

4. The method of claim 3, wherein the recovery information includes an address link to original data and a second recovery flag.

5. The method of claim 4, wherein the writing of the recovery information includes:
writing data corresponding to the write request in a data area of a first page included in the non-volatile memory (120) and writing the address link and the second recovery flag set to a first value in a spare area of the first page; and
mapping a logical address corresponding to the write request to a physical page address of the first page.

6. The method of claim 5, wherein the mapping of the logical address corresponding to the write request to the physical page address of the first page includes:
setting the first recovery flag corresponding to the write request to the first value.

7. The method of claim 6, wherein the writing of the address link and the second recovery flag includes:
determining whether the write request corresponds to an overwrite;
in response to a determination that the write request corresponds to the overwrite, determining whether the first recovery flag corresponding to the write request is the first value; and
in response to a determination that the first recovery flag corresponding to the write request is the first value, setting the address link of the first page to a physical page address of a page previously mapped to the logical address corresponding to the write request and setting the second recovery flag of the first page to the first value.

8. The method of claim 7, further comprising:
in response to a determination that the first recovery flag corresponding to the write request is not the first value, writing data present in a data area of the previously mapped page in a data area of a second page different from the first page and writing an address link set to a null value and a second recovery flag set to the first value in a spare area of the second page; and
setting the address link of the first page to a physical page address of the second page and setting the second recovery flag of the first page to the first value.

9. The method of claim 5, wherein the writing of the address link and the second recovery flag set to the first value in the spare area of the first page includes:
in response to a determination that the write request does not correspond to an overwrite, setting the address link of the first page to a null value and setting the second recovery flag of the first page to the first value.

10. The method of claim 5, wherein the performing of the data recovery based on the recovery information includes:
obtaining original data based on an address link stored in a spare area of a page mapped to a target logical address whose first recovery flag is set to the first value;
writing the original data at a third page and writing a second recovery flag set to a second value different from the first value at the third page; and
mapping the target logical address and a physical page address of the third page.

11. The method of claim 10, wherein the mapping of the target logical address and the physical page address of the third page includes:
setting the first recovery flag of the target logical address to the second value.

12. The method of claim 10 or 11, wherein the obtaining of the original data includes:
reading the page mapped to the target logical address;
determining whether the address link of the spare area of the page mapped to the target logical address is a null value;
in response to a determination that the address link does not correspond to the null value, performing a read operation with respect to a physical page address corresponding to the address link; and
in response to a determination that the address link corresponds to the null value, determining data of a data area of the read page as the original data.

13. The method of any one of claims 5 to 12, wherein garbage collection is not performed on a page where a corresponding tenant is in the warning status and a second recovery flag is set to the first value.

14. The method of any preceding claim, further comprising:
performing a read-only operation based on a determination that the status value of the tenant (T1; T2; T3) corresponding to the write request is a status value corresponding to a protection status from among the plurality of status values.

15. A storage device (100) comprising:
a non-volatile memory (120) including a plurality of data areas and a plurality of spare areas respectively corresponding to the plurality of data areas; and
a storage controller (110) configured to:
update a tenant status table, TST, including a status of each of one or more tenants (T1, T2, T3) based on a result of detecting a ransomware attack on each of the one or more tenants (T1, T2, T3);
in response to a determination that a write request is received from a host device (11), check a status value of a tenant (T1; T2; T3) corresponding to the write request based on the TST and write data corresponding to the write request in a first data area among the plurality of data areas of the non-volatile memory (120) and write recovery information in a first spare area corresponding to the first data area, based on a determination that the status value of the tenant (T1; T2; T3) corresponding to the write request from among the one or more tenants (T1, T2, T3) is a status value corresponding to a warning status from among a plurality of status values; and
perform data recovery based on the recovery information, in response to receiving a recovery signal from the host device (11).

## Patentansprüche

1. Betriebsverfahren einer Speichervorrichtung (100), wobei das Verfahren Folgendes umfasst: Erfassen eines Ransomware-Angriffs auf einen oder mehrere Tenants (T1, T2, T3), wobei der eine oder die mehreren Tenants auf einer Host-Vorrichtung (11) ausgeführt werden;
Aktualisieren einer Tenant-Statustabelle, TST, die einen Status jedes des einen oder der mehreren Tenants (T1, T2, T3) beinhaltet, basierend auf einem Ergebnis der Erfassung;
als Reaktion darauf, dass die Speichervorrichtung (100) eine Schreibanforderung von der Host-Vorrichtung (11) empfängt, Überprüfen eines Statuswerts eines Tenants (T1; T2; T3), der der Schreibanforderung entspricht, basierend auf der TST, und Schreiben von Wiederherstellungsinformationen zur Datenwiederherstellung in einen nichtflüchtigen Arbeitsspeicher (120) der Speichervorrichtung (100), basierend auf einer Bestimmung, dass der Statuswert des Tenants (T1; T2; T3) aus dem einen oder den mehreren Tenants (T1, T2, T3), der der Schreibanforderung entspricht, ein Statuswert ist, der einem Warnstatus aus einer Vielzahl von Statuswerten entspricht; und
Durchführen der Datenwiederherstellung basierend auf den Wiederherstellungsinformationen als Reaktion auf Empfangen eines Wiederherstellungssignals von der Host-Vorrichtung (11).

2. Verfahren nach Anspruch 1, wobei die TST weiter einen Bereich kontinuierlicher logischer Adressen beinhaltet, die jedem des einen oder der mehreren Tenants (T1; T2; T3) zugeordnet sind.

3. Verfahren nach Anspruch 1 oder 2, wobei eine Zuordnungstabelle, MT, die eine logische Adresse und eine physische Adresse abbildet, ein erstes Wiederherstellungsflag beinhaltet.

4. Verfahren nach Anspruch 3, wobei die Wiederherstellungsinformationen einen Adressen-Link zu Originaldaten und ein zweites Wiederherstellungsflag beinhalten.

5. Verfahren nach Anspruch 4, wobei das Schreiben der Wiederherstellungsinformationen Folgendes beinhaltet:
Schreiben von Daten, die der Schreibanforderung entsprechen, in einen Datenbereich einer ersten Seite, die in dem nichtflüchtigen Speicher (120) beinhaltet ist, und Schreiben des Adressen-Links und des zweiten Wiederherstellungsflags, das auf einen ersten Wert gesetzt ist, in einen Reservebereich der ersten Seite; und
Zuordnen einer der Schreibanforderung entsprechenden logischen Adresse zu einer physischen Seitenadresse der ersten Seite.

6. Verfahren nach Anspruch 5, wobei das Zuordnen der der Schreibanforderung entsprechenden logischen Adresse zu der physischen Seitenadresse der ersten Seite Folgendes beinhaltet:
Setzen des ersten Wiederherstellungsflags, das der Schreibanforderung entspricht, auf den ersten Wert.

7. Verfahren nach Anspruch 6, wobei das Schreiben des Adressen-Links und des zweiten Wiederherstellungsflags Folgendes beinhaltet:
Bestimmen, ob die Schreibanforderung einem Überschreiben entspricht;
als Reaktion auf eine Bestimmung, dass die Schreibanforderung dem Überschreiben entspricht, Bestimmen, ob das der Schreibanforderung entsprechende erste Wiederherstellungsflag den ersten Wert aufweist; und
als Reaktion auf eine Bestimmung, dass das der Schreibanforderung entsprechende erste Wiederherstellungsflag den ersten Wert aufweist, Setzen des Adressen-Links der ersten Seite auf eine physische Seitenadresse einer Seite, die zuvor zu der der Schreibanforderung entsprechenden logischen Adresse zugeordnet war, und Setzen des zweiten Wiederherstellungsflags der ersten Seite auf den ersten Wert.

8. Verfahren nach Anspruch 7, weiter umfassend:
als Reaktion auf eine Bestimmung, dass das der Schreibanforderung entsprechende erste Wiederherstellungsflag nicht den ersten Wert aufweist, Schreiben von in einem Datenbereich der zuvor gebildeten Seite vorhandenen Daten in einen Datenbereich einer zweiten Seite, die sich von der ersten Seite unterscheidet, und Schreiben eines auf einen Nullwert gesetzten Adressen-Links und eines auf den ersten Wert gesetzten zweiten Wiederherstellungsflags in einen Reservebereich der zweiten Seite; und
Setzen des Adressen-Links der ersten Seite auf eine physische Seitenadresse der zweiten Seite und Setzen des zweiten Wiederherstellungsflags der ersten Seite auf den ersten Wert.

9. Verfahren nach Anspruch 5, wobei das Schreiben des Adressen-Links und des auf den ersten Wert gesetzten zweiten Wiederherstellungsflags in den Reservebereich der ersten Seite Folgendes beinhaltet:
als Reaktion auf eine Bestimmung, dass die Schreibanforderung nicht einem Überschreiben entspricht, Setzen des Adressen-Links der ersten Seite auf einen Nullwert und Setzen des zweiten Wiederherstellungsflags der ersten Seite auf den ersten Wert.

10. Verfahren nach Anspruch 5, wobei das Durchführen der Datenwiederherstellung basierend auf den Wiederherstellungsinformationen Folgendes beinhaltet:
Erhalten von Originaldaten basierend auf einem Adressen-Link, der in einem Reservebereich einer Seite gespeichert ist, die einer logischen Zieladresse zugeordnet ist, deren erstes Wiederherstellungsflag auf den ersten Wert gesetzt ist;
Schreiben der Originaldaten auf einer dritten Seite und Schreiben eines zweiten Wiederherstellungsflags, das auf einen zweiten Wert gesetzt ist, der sich von dem ersten Wert unterscheidet, auf der dritten Seite; und
Zuordnen der logischen Zieladresse und einer physischen Seitenadresse der dritten Seite.

11. Verfahren nach Anspruch 10, wobei das Zuordnen der logischen Zieladresse und der physischen Seitenadresse der dritten Seite Folgendes beinhaltet:
Setzen des ersten Wiederherstellungsflags der logischen Zieladresse auf den zweiten Wert.

12. Verfahren nach Anspruch 10 oder 11, wobei das Erhalten der Originaldaten Folgendes beinhaltet:
Lesen der Seite, die der logischen Zieladresse zugeordnet ist;
Bestimmen, ob der Adressen-Link des Reservebereichs der Seite, die zu der logischen Zieladresse zugeordnet ist, ein Nullwert ist;
als Reaktion auf eine Bestimmung, dass der Adressen-Link nicht dem Nullwert entspricht, Durchführen einer Leseoperation in Bezug auf eine physische Seitenadresse, die dem Adressen-Link entspricht; und
als Reaktion auf eine Bestimmung, dass der Adressen-Link dem Nullwert entspricht, Bestimmen von Daten eines Datenbereichs der gelesenen Seite als die Originaldaten.

13. Verfahren nach einem der Ansprüche 5 bis 12, wobei auf einer Seite, auf der sich ein entsprechender Tenant im Warnstatus befindet, keine Speicherbereinigung durchgeführt wird und ein zweites Wiederherstellungsflag auf den ersten Wert gesetzt wird.

14. Verfahren nach einem vorstehenden Anspruch, weiter umfassend:
Durchführen einer Nur-Lese-Operation basierend auf einer Bestimmung, dass der Statuswert des Tenants (T1; T2; T3), der der Schreibanforderung entspricht, ein Statuswert ist, der einem Schutzstatus aus der Vielzahl von Statuswerten entspricht.

15. Speichervorrichtung (100), umfassend:
einen nichtflüchtigen Speicher (120), der eine Vielzahl von Datenbereichen und eine Vielzahl von Reservebereichen beinhaltet, die jeweils der Vielzahl von Datenbereichen entsprechen; und
eine Speichersteuereinheit (110), die dazu konfiguriert ist:
eine Tenant-Statustabelle, TST, die einen Status jedes von einem oder mehreren Tenants (T1, T2, T3) beinhaltet, basierend auf einem Ergebnis des Erfassens eines Ransomware-Angriffs auf jeden des einen oder der mehreren Tenants (T1, T2, T3) zu aktualisieren;
als Reaktion auf eine Bestimmung, dass eine Schreibanforderung von einer Host-Vorrichtung (11) empfangen wurde, einen Statuswert eines Tenants (T1; T2; T3), der der Schreibanforderung entspricht, basierend auf der TST zu prüfen und Daten, die der Schreibanforderung entsprechen, in einen ersten Datenbereich aus der Vielzahl von Datenbereichen des nichtflüchtigen Speichers (120) zu schreiben und Schreibwiederherstellungsinformationen in einen ersten Reservebereich, der dem ersten Datenbereich entspricht, basierend auf einer Bestimmung zu schreiben, dass der Statuswert des Tenants (T1; T2; T3) aus dem einen oder den mehreren Tenants (T1, T2, T3), der der Schreibanforderung entspricht, ein Statuswert ist, der einem Warnstatus aus einer Vielzahl von Statuswerten entspricht; und
eine Datenwiederherstellung basierend auf den Wiederherstellungsinformationen als Reaktion auf Empfangen eines Wiederherstellungssignals von der Host-Vorrichtung (11) durchzuführen.

## Revendications

1. Procédé de fonctionnement d'un dispositif de stockage (100), le procédé comprenant : la détection d'une attaque de rançongiciel sur un ou plusieurs locataires (T1, T2, T3), les un ou plusieurs locataires étant exécutés dans un dispositif hôte (11) ;
la mise à jour d'une table de statut de locataire, TST, incluant un statut de chacun des un ou plusieurs locataires (T1, T2, T3) sur la base d'un résultat de la détection ;
en réponse au dispositif de stockage (100) recevant une demande d'écriture en provenance du dispositif hôte (11), la vérification d'une valeur de statut d'un locataire (T1 ; T2 ; T3) correspondant à la demande d'écriture sur la base de la TST et l'écriture d'informations de récupération pour une récupération de données dans une mémoire non volatile (120) du dispositif de stockage (100) sur la base d'une détermination que la valeur de statut du locataire (T1; T2 ; T3) correspondant à la demande d'écriture parmi les un ou les plusieurs locataires (T1, T2, T3) est une valeur de statut correspondant à un statut d'avertissement parmi une pluralité de valeurs de statut ; et
la réalisation de la récupération de données sur la base des informations de récupération, à la suite de la réception d'un signal de récupération en provenance du dispositif hôte (11).

2. Procédé selon la revendication 1, dans lequel la TST inclut en outre une plage d'adresses logiques continues allouées à chacun des un ou plusieurs locataires (T1 ; T2 ; T3).

3. Procédé selon la revendication 1 ou 2, dans lequel une table de mappage, MT, mappant une adresse logique et une adresse physique inclut un premier indicateur de récupération.

4. Procédé selon la revendication 3, dans lequel les informations de récupération incluent un lien d'adresse vers des données d'origine et un second indicateur de récupération.

5. Procédé selon la revendication 4, dans lequel l'écriture des informations de récupération inclut :
l'écriture de données correspondant à la demande d'écriture dans une zone de données d'une première page incluse dans la mémoire non volatile (120) et l'écriture du lien d'adresse et du second indicateur de récupération réglé à une première valeur dans une zone de réserve de la première page ; et
le mappage d'une adresse logique correspondant à la demande d'écriture à une adresse de page physique de la première page.

6. Procédé selon la revendication 5, dans lequel le mappage de l'adresse logique correspondant à la demande d'écriture à l'adresse de page physique de la première page inclut :
le réglage du premier indicateur de récupération correspondant à la demande d'écriture à la première valeur.

7. Procédé selon la revendication 6, dans lequel l'écriture du lien d'adresse et du second indicateur de récupération inclut :
la détermination pour savoir si la demande d'écriture correspond à un écrasement ;
à la suite d'une détermination que la demande d'écriture correspond à l'écrasement, la détermination pour savoir si le premier indicateur de récupération correspondant à la demande d'écriture est la première valeur ; et
à la suite d'une détermination que le premier indicateur de récupération correspondant à la demande d'écriture est la première valeur, le réglage du lien d'adresse de la première page à une adresse de page physique d'une page précédemment mappée à l'adresse logique correspondant à la demande d'écriture et le réglage du second indicateur de récupération de la première page à la première valeur.

8. Procédé selon la revendication 7, comprenant en outre :
à la suite d'une détermination que le premier indicateur de récupération correspondant à la demande d'écriture n'est pas la première valeur, l'écriture de données présentes dans une zone de données de la page précédemment mappée dans une zone de données d'une deuxième page différente de la première page et l'écriture d'un lien d'adresse réglé à une valeur nulle et d'un second indicateur de récupération réglé à la première valeur dans une zone de réserve de la deuxième page ; et
le réglage du lien d'adresse de la première page à une adresse de page physique de la deuxième page et le réglage du second indicateur de récupération de la première page à la première valeur.

9. Procédé selon la revendication 5, dans lequel l'écriture du lien d'adresse et du second indicateur de récupération réglé à la première valeur dans la zone de réserve de la première page inclut :
à la suite d'une détermination que la demande d'écriture ne correspond pas à un écrasement, le réglage du lien d'adresse de la première page à une valeur nulle et le réglage du second indicateur de récupération de la première page à la première valeur.

10. Procédé selon la revendication 5, dans lequel la réalisation de la récupération de données sur la base des informations de récupération inclut :
l'obtention de données d'origine sur la base d'un lien d'adresse stocké dans une zone de réserve d'une page mappée à une adresse logique cible dont le premier indicateur de récupération est réglé à la première valeur ;
l'écriture des données d'origine au niveau d'une troisième page et l'écriture d'un second indicateur de récupération réglé à une seconde valeur différente de la première valeur au niveau de la troisième page ; et
le mappage de l'adresse logique cible et d'une adresse de page physique de la troisième page.

11. Procédé selon la revendication 10, dans lequel le mappage de l'adresse logique cible et de l'adresse de page physique de la troisième page inclut :
le réglage du premier indicateur de récupération de l'adresse logique cible par rapport à la seconde valeur.

12. Procédé selon la revendication 10 ou 11, dans lequel l'obtention des données d'origine inclut :
la lecture de la page mappée à l'adresse logique cible ;
la détermination pour savoir si le lien d'adresse de la zone de réserve de la page mappée à l'adresse logique cible est une valeur nulle ;
à la suite d'une détermination que le lien d'adresse ne correspond pas à la valeur nulle, la réalisation d'une opération de lecture par rapport à une adresse de page physique correspondant au lien d'adresse ; et
à la suite d'une détermination que le lien d'adresse correspond à la valeur nulle, la détermination de données d'une zone de données de la page lue en tant que données d'origine.

13. Procédé selon l'une quelconque des revendications 5 à 12, dans lequel la collecte de déchets n'est pas effectuée sur une page sur laquelle un locataire correspondant est dans le statut d'avertissement et un second indicateur de récupération est réglé à la première valeur.

14. Procédé selon une quelconque revendication précédente, comprenant en outre :
la réalisation d'une opération de lecture seule sur la base d'une détermination que la valeur de statut du locataire (T1 ; T2 ; T3) correspondant à la demande d'écriture est une valeur de statut correspondant à un statut de protection parmi la pluralité de valeurs de statut.

15. Dispositif de stockage (100) comprenant :
une mémoire non volatile (120) incluant une pluralité de zones de données et une pluralité de zones de réserve correspondant respectivement à la pluralité de zones de données ; et
un dispositif de commande de stockage (110) configuré pour :
mettre à jour une table de statut de locataire, TST, incluant un statut de chacun d'un ou de plusieurs locataires (T1, T2, T3) sur la base d'un résultat de détection d'une attaque de rançongiciel sur chacun des un ou plusieurs locataires (T1, T2, T3) ;
à la suite d'une détermination qu'une demande d'écriture est reçue d'un dispositif hôte (11), vérifier une valeur de statut d'un locataire (T1 ; T2 ; T3) correspondant à la demande d'écriture sur la base de la TST et écrire des données correspondant à la demande d'écriture dans une première zone de données parmi la pluralité de zones de données de la mémoire non volatile (120) et écrire des informations de récupération dans une première zone de réserve correspondant à la première zone de données, sur la base d'une détermination que la valeur de statut du locataire (T1 ; T2 ; T3) correspondant à la demande d'écriture parmi les un ou plusieurs locataires (T1, T2, T3) est une valeur de statut correspondant à un statut d'avertissement parmi une pluralité de valeurs de statut ; et
effectuer une récupération de données sur la base des informations de récupération, à la suite de la réception d'un signal de récupération provenant du dispositif hôte (11).
